# EUROPEAN PATENT APPLICATION

(11) **EP 3 379 605 A1**
(43) Date of publication of application: **26.09.2018**
(21) Application number: 17190557.3
(22) Date of filing: 12.09.2017
(51) Int. Cl.: H01M 2/16, H01M 2/24, H01M 4/131, H01M 4/485, H01M 10/0525, H01M 10/0562, H01M 10/0565

(54) **SECONDARY BATTERY, BATTERY PACK, AND VEHICLE**

(30) Priority: 23.03.2017 JP 2017058138; 08.09.2017 JP 2017172753
(71) Applicant: KABUSHIKI KAISHA TOSHIBA, Minato-ku Tokyo 105-8001 (JP)
(72) Inventor: Sasakawa, Tetsuya, Tokyo, 105-8001 (JP); Harada, Yasuhiro, Tokyo, 105-8001 (JP); Takami, Norio, Tokyo, 105-8001 (JP)
(74) Representative: Hoffmann Eitle

(57) **Abstract**

According to one approach, there is provided a secondary battery (100) including a negative electrode active material-containing layer (3b), a positive electrode active material-containing layer (5b), and an electrical insulation layer (4). The electrical insulation layer (4) is provided between the negative electrode active material-containing layer (3b) and the positive electrode active material-containing layer (5b) and contains electrically insulating particles. The particle size distribution of the electrically insulating particles includes at least two peaks.

## Description

### FIELD

The present disclosure relates to a secondary battery, a battery pack, and a vehicle.

### BACKGROUND

Secondary batteries such as a lithium ion battery are becoming applied widely to onboard use and stationary use, and are accordingly demanded to have a higher capacity, longer life, and higher output. A lithium titanium composite oxide changes little in its volume upon charge and discharge, and is therefore excellent in cycle performance. In addition, since for the lithium insertion/extraction reaction of the lithium titanium composite oxide, metallic lithium hardly precipitates in principle, a battery using the lithium titanium composite oxide has little performance degradation, even when charge and discharge is repeated at a large current.

### BRIEF DESCRIPTION OF THE DRAWINGS

FIG. 1 is a graph showing a particle size distribution of electrically insulating particles in an example of an electrical insulation layer according to an approach;
FIG. 2 is a cross-sectional view schematically showing an example of a secondary battery according to an approach;
FIG. 3 is an enlarged cross-sectional view of section A of the secondary battery shown in FIG. 2;
FIG. 4 is a schematic cross-sectional view showing an example of an electrode complex that may be included in another example of a secondary battery according to the approach;
FIG. 5 is a schematic cross-sectional view showing another example of an electrode complex that may be included in the other example of the secondary battery according to the approach;
FIG. 6 is a schematic cross-sectional view showing the other example of a secondary battery according to the approach;
FIG. 7 is a perspective view schematically showing an example of a battery module according to an approach;
FIG. 8 is an exploded perspective view schematically showing an example of a battery pack according to an approach;
FIG. 9 is a block diagram showing an example of an electric circuit of the battery pack shown in FIG. 8;
FIG. 10 is a cross-sectional view schematically showing an example of a vehicle according to an approach; and
FIG. 11 is a diagram schematically showing another example of the vehicle according to an approach.

### DETAILED DESCRIPTION

According to one approach, there is provided a secondary battery including a negative electrode active material-containing layer, a positive electrode active material-containing layer, and an electrical insulation layer. The electrical insulation layer is provided between the negative electrode active material-containing layer and the positive electrode active material-containing layer and contains electrically insulating particles. The particle size distribution of the electrically insulating particles includes at least two peaks.

According to another approach, there is provided a battery pack including the secondary battery according to the above approach.

According to a further other approach, there is provided a vehicle including the battery pack according to the above approach.

According to the approaches, there are provided a secondary battery having suppressed self-discharge, a battery pack having suppressed self-discharge, and a vehicle including this battery pack.

To electrically insulate a positive electrode and a negative electrode from each other, a sheet-shaped separator is used in general. As a measure for increasing the energy density of a secondary battery such as a lithium ion battery, there is a method where electrically insulating particles are applied thinly onto the surfaces of the electrodes, instead of using the separator. However, if the electrically insulating particles applied to an uneven electrode surface have a small particle size, they readily enter gaps among the electrode active material, and a part of the electrode may be exposed. On the other hand, if electrically insulating particles having a large particle size are applied thinly, pinholes are readily formed, and thus, there is concern that the self-discharge of the secondary battery may be large.

Approaches will now be described with reference to the accompanying drawings.

### (First Approach)

According to a first approach, there is provided a secondary battery including a negative electrode active material-containing layer, a positive electrode active material-containing layer, and an electrical insulation layer. The electrical insulation layer is provided between the negative electrode active material-containing layer and the positive electrode active material-containing layer, and contains electrically insulating particles. The particle size distribution of the electrically insulating particles includes at least two peaks.

In the secondary battery according to the approach, the electrical insulation layer is formed on, for example, the surface of the negative electrode active material-containing layer and/or the positive electrode active material-containing layer.

As described later, the negative electrode active material-containing layer may be included in a negative electrode. The negative electrode may include a current collector (negative electrode current collector) in addition to the negative electrode active material-containing layer. The positive electrode active material-containing layer may be included in a positive electrode. The positive electrode may include a current collector (positive electrode current collector) in addition to the positive electrode active material-containing layer. The negative electrode including the negative electrode active material-containing layer, the positive electrode including the positive electrode active material-containing layer, and the electrical insulation layer may form an electrode group. In the electrode group, the electrical insulation layer may be formed on one surface of the negative electrode and/or the positive electrode. In addition, the electrical insulation layer may be formed on both of reverse surfaces of the negative electrode and/or the positive electrode.

Alternatively, the negative electrode active material-containing layer may be provided on one surface of the current collector, and the positive electrode active material-containing layer may be formed on the surface on the reverse side of the current collector to form an electrode complex. That is, the negative electrode active material-containing layer and the positive electrode active material-containing layer may form an electrode having a bipolar structure. In the electrode complex, the electrical insulation layer is formed on the surface of the negative electrode active material-containing layer and/or the positive electrode active material-containing layer. That is, the negative electrode active material-containing layer and/or the positive electrode active material-containing layer are located between the electrical insulation layer and the current collector.

The secondary battery according to the first approach may include an electrolyte. The electrolyte may be held in the above-described electrode group or electrode complex.

The secondary battery according to the first approach may further include a separator disposed between the negative electrode active material-containing layer and the positive electrode active material-containing layer. The separator disposed between the negative electrode active material-containing layer and the positive electrode active material-containing layer may be adjacent to the electrical insulation layer formed on the negative electrode active material-containing layer and/or the positive electrode active material-containing layer.

The secondary battery according to the first approach may further include a container member that houses the electrode group or electrode complex, and the electrolyte. The container member may house a plural of electrode groups. The plural electrode groups are, for example, electrically connected in series and housed in the container member.

The secondary battery according to the first approach may further include a negative electrode terminal and a positive electrode terminal, which are electrically connected to the current collector. The negative electrode terminal and the positive electrode terminal may be electrically connected to the current collector via electrode tabs provided on the current collector.

The secondary battery according to the first approach includes a nonaqueous electrolyte secondary battery including a nonaqueous electrolyte.

The electrical insulation layer, the negative electrode active material-containing layer, the positive electrode active material-containing layer, the current collector, the electrolyte, the separator, the container member, the negative electrode terminal, and the positive electrode terminal will be described below in detail.

### 1) Electrical Insulation Layer

The electrical insulation layer contains electrically insulating particles including at least two peaks in the particle size distribution.

Including two or more peaks in the particle size distribution of the electrically insulating particles of the electrical insulation layer means that the electrically insulating particles contained in the electrical insulation layer can be classified into particles of roughly two or more particle sizes. Electrically insulating particles having a large particle size have the effect of spatially separating the negative electrode and the positive electrode. On the other hand, electrically insulating particles having a small particle size fill the gaps among the electrically insulating particles of the large particle size to suppress formation of pinholes.

For example, by using electrically insulating particles including at least two peaks in the particle size distribution as the electrically insulating particles to be contained in the electrical insulation layer, the electrical insulation layer can be formed without generating pinholes on the electrode, and self-discharge of the secondary battery can be suppressed.

The at least two peaks may include a first peak having the highest peak strength and a second peak having the second highest peak strength following the first peak.

The peak strength ratio of the peak strength of the first peak relative to the peak strength of the second peak is preferably 1 to 10. The peak strength ratio (first peak strength / second peak strength) is more preferably 1.2 to 5.

In the particle size distribution, one of a first particle size corresponding to the first peak and a second particle size corresponding to the second peak is preferably at least twice larger than the other. That is, preferably, the first particle size corresponding to the first peak has a value at least twice larger than the second particle size corresponding to the second peak, or the second particle size has a value at least twice larger than the first particle size.

Additionally, in the particle size distribution, the first peak is preferably located at the side towards a smaller particle size with respect to the second peak. In other words, the first particle size preferably has a value smaller than the second particle size.

The first particle size is preferably greater than 0.1 µm and equal to or less than 1 µm. When the first particle size is larger than 0.1 µm, a certain amount of gaps can be formed in the electrical insulation layer. As a result, if a liquid electrolyte or gel electrolyte is used, a predetermined amount of the electrolyte can be impregnated and held in the electrical insulation layer, and high output performance can be obtained. In addition, when the first particle size is equal to or less than 1 µm, an electrical micro short circuit between the positive electrode and the negative electrode can be prevented. The second particle size is preferably 0.3 µm to 5 µm.

When the form of the electrically insulating particles in the electrical insulation layer is defined in the above range, the gaps for maintaining high ionic conductivity in the electrical insulation layer can be ensured, and a micro short circuit can be prevented.

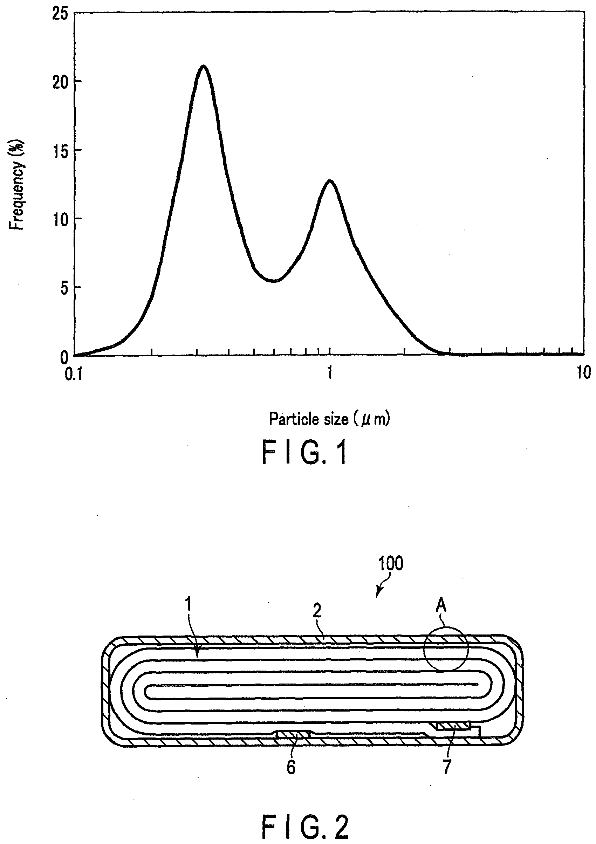

FIG. 1 shows a graph representing the particle size distribution of electrically insulating particles in an electrical insulation layer of an example with a preferable form. FIG. 1 shows, as the graph representing the particle size distribution of electrically insulating particles, a curve representing the frequency (vertical axis) relative to particle size (horizontal axis) of the electrically insulating particles in the electrical insulation layer. The curve shown in FIG. 1 has two peaks, and it can be seen that the frequencies of the particle sizes of the electrically insulating particles include two maximum values in the particle size distribution.

As the electrically insulating particles, a metal oxide such as Al₂O₃, ZrO₂ SiO₂, MgO, or the like may be used. If a solid electrolyte is used as the electrically insulating particles, the resistance of the secondary battery can be lowered. Examples of the solid electrolyte are Li₇La₃Zr₂O₁₂ (LLZ) having a garnet structure, Li₁₊ₓAlₓTi₂₋ₓ(PO₄)₃ (LATP) (0 ≤ x ≤ 1) and Li₁₊ₓAlₓGe₂₋ₓ(PO₄)₃ (LAGP) (0 ≤ x ≤ 1) each having a NASICON structure, and La_{2/3-x}LiₓTiO₃ (0.3 ≤ x ≤ 0.7) having a perovskite structure.

The electrically insulating particles used in the electrical insulation layer may include one type or two or more types of electrically insulating particles. For example, there may be used electrically insulating particles of a single material which includes two or more peaks in the particle size distribution because different particle sizes are included. Alternatively, for example, electrically insulating particles of two or more materials of different particle sizes may be used to form two or more peaks in the particle size distribution of the electrical insulation layer.

As a specific example, a solid electrolyte having a relatively small particle size and a metal oxide such as alumina (Al₂O₃) having a relatively large particle size may be used in combination. In the solid electrolyte of the small particle size, the ionic conductive path in solid is short. For this reason, the proportion of ionic conduction performed by the solid electrolyte in the electrical insulation layer becomes large, and ionic conductivity in the electrical insulation layer can be ensured. In this case, when particles of an inexpensive material such as alumina are used as the electrically insulating particles of a large particle size for ensuring the insulation between the positive electrode and the negative electrode, the cost can be reduced without lowering the ionic conductivity in the electrical insulation layer.

The electrical insulation layer may also contain a binder in addition to the electrically insulating particles.

The amount of the binder contained in the electrical insulation layer is preferably 1 part by weight to 5 parts by weight with respect to the entire electrical insulation layer (100 parts by weight). When the content of the binder is 1 part by weight or more, sufficient adhesion strength to the electrode can be obtained. When the content of the binder is 5 parts by weight or less, high ionic conductivity in the electrical insulation layer can be ensured.

As the binder, for example, polytetrafluoroethylene (PTFE), polyvinylidene fluoride (PVdF), fluorine rubber, styrene-butadiene rubber, polyacrylate compounds, imide compounds, carboxymethylcellulose, and the like may be used. One of these may be used as the binder, or two or more may be used in combination as the binder.

The porosity of the electrical insulation layer is preferably 20% to 80%. If the porosity is 20% or more, a liquid electrolyte can be sufficiently held in the electrical insulation layer, and therefore, high ionic conductivity can be ensured. If the porosity is 80% or less, a micro short circuit between the positive electrode and the negative electrode can be prevented.

Note that as a measure for electrically insulating the negative electrode layer and the positive electrode layer, a battery including bipolar electrodes provided with, for example, a sheet-shaped separator sometimes uses a sheet-shaped separator whose area is larger than the area of the negative electrode layer and/or the area of the positive electrode layer to attain proper insulation. However, if a bipolar battery including a liquid electrolyte uses such a separator, liquid junction of the electrolyte may occur. The electrolyte that has caused the liquid junction forms an external ionic conductive path for the bipolar electrode, and as a result, the voltage in a bipolar stack (electrode complex) may become decreased. In the secondary battery according to the approach, the area of the electrical insulation layer is the same as the area of the electrode having the electrical insulation layer formed, thereby reducing liquid junction of the liquid electrolyte. The area of the electrical insulation layer may be equal to the area of the electrode or larger than the area of the electrode.

The particle size distribution of the electrically insulating particles in the electrical insulation layer can be measured by, for example, the static image analysis method of JIS Z 8827-1 (2008).

If the electrical insulation layer of the measurement target is included in the secondary battery, for example, the target electrical insulation layer is extracted in the following way, and the measurement is performed for the obtained electrical insulation layer.

First, the secondary battery is disassembled, and the electrode (the positive electrode and/or the negative electrode) to which the electrical insulation layer had been applied is extracted. Next, the electrode with the electrical insulation layer applied is sufficiently washed by ethyl methyl carbonate and vacuum-dried. Subsequently, a cross-section of the electrical insulation layer portion that had been applied to the dried electrode is cutout by argon ion milling. Using the cutout cross-sectional portion, the particle size distribution is measured by the image analysis method.

The particle size distribution is thus measured on a number basis. A particle size corresponding to a number frequency exhibiting a maximum value relative to the particle size is defined as a peak particle size. Note that the maximum value of the number frequency corresponds to the peak strength of the corresponding peak particle size.

Additionally, the thickness of the electrical insulation layer can be examined using the cross-sectional image of the electrical insulation layer portion obtained when applying the image analysis method. The sectional image is converted into a monochrome image of 256 tones and binarized by providing a threshold. Accordingly, in the SEM image, the electrically insulating particles and the binder are displayed in white, and the gaps are displayed in black. The distribution of the electrically insulating particles is examined using this image, thereby obtaining the thickness of the electrical insulation layer.

In addition, the porosity of the electrical insulation layer can be calculated using the binarized SEM image. The area of black pixels representing gaps relative to the area of all pixels in the binarized sectional image is calculated as a porosity.

### 2) Negative Electrode Active Material-containing Layer

The negative electrode active material-containing layer may include a negative electrode active material, and optionally an electro-conductive agent and a binder.

The negative electrode active material-containing layer may be formed on one surface or both of reverse surfaces of a current collector, to provide a negative electrode. Alternatively, while the negative electrode active material-containing layer is formed on one surface of the current collector, a later described positive electrode active material-containing layer may be formed on a reverse surface of the current collector, to provide a bipolar electrode.

The negative electrode active material-containing layer may include one kind or two or more kinds of negative electrode active materials. Examples of negative electrode active materials include titanium-containing oxides, such as lithium titanate having a ramsdellite structure (e.g., Li₂Ti₃O₇), lithium titanate having a spinel structure (e.g., Li₄Ti₅O₁₂), monoclinic titanium dioxide (TiO₂), anatase type titanium dioxide, rutile type titanium dioxide, a hollandite type titanium composite oxide, an orthorhombic Na-containing titanium composite oxide (e.g., Li₂Na₂Ti₆O₁₄), a niobium-titanium composite oxide represented by Ti₁₋ₓM_{x+y}Nb_{2-y}O_{7-σ} (M is at least one element selected from the group consisting of Mg Fe, Ni, Co, W, Ta, and Mo; 0 ≤ x < 1, 0 ≤ y < 1, -0.3 ≤ σ ≤ 0.3) such as a monoclinic niobium titanium composite oxide (e.g., Nb₂TiO₇), a titanium-containing composite oxide represented by a general formula Li₂₊ₐM1_{2-b}Ti_{6-c}M2_{d}O_{14+δ} (M1 is at least one element selected from the group consisting of Sr, Ba, Ca, Mg, Na, Cs, Rb, and K, M2 is at least one element selected from the group consisting of Zr, Sn, V, Nb, Ta, Mo, W, Y, Fe, Co, Cr, Mn, Ni, and Al; 0 ≤ a ≤ 6, 0 ≤ b < 2, 0 ≤ c < 6, 0 ≤ d < 6, and -0.5 ≤ δ ≤ 0.5, and the like. In addition to the above described titanium-containing oxides, graphite and the like may be used as the negative electrode active material.

The electro-conductive agent is added to improve a current collection performance and to suppress the contact resistance between the negative electrode active material and the current collector. Examples of the electro-conductive agent include carbonaceous substances such as vapor grown carbon fiber (VGCF), acetylene black, carbon black, and graphite. One of these may be used as the electro-conductive agent, or two or more may be used in combination as the electro-conductive agent. Alternatively, instead of using an electro-conductive agent, a carbon coating or an electro-conductive inorganic material coating may be applied to the surface of the negative electrode active material particle.

The binder is added to fill gaps among the dispersed negative electrode active material and also to bind the negative electrode active material with the current collector. Examples of the binder include polytetrafluoroethylene (PTFE), polyvinylidene fluoride (PVdF), fluorine rubber, styrene-butadiene rubber, polyacrylate compounds, and imide compounds. One of these may be used as the binder, or two or more may be used in combination as the binder.

The active material, conductive agent and binder in the negative electrode active material-containing layer are preferably blended in proportions of 70% by mass to 96% by mass, 2% by mass to 28% by mass, and 2% by mass to 28% by mass, respectively. When the amount of conductive agent is 2% by mass or more, the current collection performance of the negative electrode active material-containing layer can be improved. When the amount of binder is 2% by mass or more, binding between the negative electrode active material-containing layer and current collector is sufficient, and excellent cycling performances can be expected. On the other hand, an amount of each of the conductive agent and binder is preferably 28% by mass or less, in view of increasing the capacity.

The negative electrode active material-containing layer may further contain electrically insulating particles. As the electrically insulating particles to be contained in the negative electrode active material-containing layer, electrically insulating particles that may be contained in the electrical insulation layer may be used. By containing electrically insulating particles, lithium ion conductivity in the negative electrode active material-containing layer can be improved, thus allowing the secondary battery to have high output.

The density of the negative electrode active material-containing layer (excluding the current collector) is preferably 1.8 g/cm³ to 2.8 g/cm³. The negative electrode active material-containing layer having a density within this range is excellent in energy density and ability to hold the electrolyte. The density of the negative electrode active material-containing layer is more preferably 2.1 g/cm³ to 2.6 g/cm³.

The negative electrode including the negative electrode active material-containing layer may be produced by the following method, for example. First, a negative electrode active material, an electro-conductive agent, and a binder are suspended in a solvent to prepare a slurry. The slurry is applied onto one surface or both of reverse surfaces of a current collector. Next, the applied slurry is dried to form a layered stack of the negative electrode active material-containing layer and the current collector. Then, the layered stack is subjected to pressing. The negative electrode can be produced in this manner. Alternatively, the negative electrode may also be produced by the following method. First, a negative electrode active material, an electro-conductive agent, and a binder are mixed to obtain a mixture. Next, the mixture is formed into pellets. Then the negative electrode can be obtained by arranging the pellets on the current collector.

### 3) Positive Electrode Active Material-containing Layer

The positive electrode active material-containing layer may be formed on one surface or both of reverse surfaces of a current collector, to provide a positive electrode. Alternatively, while the above described negative electrode active material-containing layer is formed on one surface of the current collector, the positive electrode active material-containing layer may be formed on a reverse surface of the current collector, to provide a bipolar electrode.

The positive electrode active material-containing layer may include a positive electrode active material, and optionally an electro-conductive agent and a binder.

As the positive electrode active material, for example, an oxide, a sulfide, or a polymeric material may be used. The positive electrode-active material-containing layer may include one kind of positive electrode active material, or alternatively, include two or more kinds of positive electrode active materials. Examples of the oxide and sulfide include a compound capable of having Li and Li ions be inserted and extracted.

Examples of such compounds include manganese dioxide (MnO₂), iron oxide, copper oxide, nickel oxide, lithium manganese composite oxide (e.g., LiₓMn₂O₄ or LiₓMnO₂; 0 < x ≤ 1), lithium nickel composite oxide (e.g., LiₓNiO₂; 0 < x ≤ 1), lithium cobalt composite oxide (e.g., LiₓCoO₂; 0 < x ≤ 1), lithium nickel cobalt composite oxide (e.g., LiₓNi_{1-y}Co_{y}O₂; 0 < x ≤ 1, 0 < y < 1), lithium manganese cobalt composite oxide (e.g., LiₓMn_{y}Co_{1-y}O₂; 0 < x ≤ 1, 0 < y < 1), lithium manganese nickel composite oxide having a spinel structure (e.g., LiₓMn_{2-y}Ni_{y}O₄; 0 < x ≤ 1, 0 < y < 2), lithium phosphate having an olivine structure (e.g., LiₓFePO₄; 0 < x ≤ 1, LiₓFe_{1-y}Mn_{y}PO₄; 0 < x ≤ 1, 0 < y < 1, and LiₓCoPO₄; 0 < x ≤ 1), iron sulfate [Fe₂(SO₄)₃], vanadium oxide (e.g., V₂O₅), and lithium nickel cobalt manganese composite oxide (LiNi_{1-x-y}COₓMn_{y}O₂; 0 < x < 1, 0 < y < 1, x + y < 1). As the active material, one of these compounds may be used singly, or plural compounds may be used in combination.

Polymeric materials include, for example, electro-conductive polymer materials such as polyaniline and polypyrrole, and disulfide-based polymer materials.

Other than the above describe positive electrode active materials, sulfur (S), carbon fluoride, and the like may also be used.

More preferred examples of the positive electrode active material include lithium manganese composite oxide having a spinel structure (e.g., LiₓMn₂O₄; 0 < x ≤ 1), lithium nickel composite oxide (e.g., LiₓNiO₂; 0 < x ≤ 1), lithium cobalt composite oxide (e.g., LiₓCoO₂; 0 < x ≤ 1), lithium nickel-cobalt composite oxide (e.g., LiNi_{1-y}Co_{y}O₂; 0 < x ≤ 1), lithium manganese-nickel composite oxide having a spinel structure (e.g., LiₓMn_{2-y}Ni_{y}O₄; 0 < x ≤ 1, 0 < y < 2), lithium manganese-cobalt composite oxide (e.g., LiₓMn_{y}CO_{1-y}O₂; 0 < x ≤ 1, 0 < y < 1), lithium iron phosphate (e.g., LiₓFePO₄; 0 < x ≤ 1), and lithium nickel-cobalt-manganese composite oxide (LiNi_{1-x-y}COₓMn_{y}O₂; 0 < x < 1, 0 < y < 1, x + y < 1). The positive electrode potential can be made high by using these positive electrode active materials.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably from 100 nm to 1 µm. The positive electrode active material having a primary particle size of 100 nm or more is easy to handle during industrial production. In the positive electrode active material having a primary particle size of 1 µm or less, diffusion of lithium ions within solid can proceed smoothly.

The specific surface area of the positive electrode active material is preferably from 0.1 m²/g to 10 m²/g. The positive electrode active material having a specific surface area of 0.1 m²/g or more can secure sufficient sites for inserting and extracting Li ions. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the current collector. Examples of the binder include polytetrafluoroethylene (PTFE), polyvinylidene fluoride (PVdF), fluorine rubber, polyacrylate compounds, and imide compounds. One of these may be used as the binder, or two or more may be used in combination as the binder.

The electro-conductive agent is added to improve a current collection performance and to suppress the contact resistance between the positive electrode active material and the current collector. Examples of the electro-conductive agent include carbonaceous substances such as vapor grown carbon fiber (VGCF), acetylene black, carbon black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. When the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 80% by mass to 95% by mass, 2% by mass to 17% by mass, and 3% by mass to 18% by mass, respectively.

When the amount of the electro-conductive agent is 3% by mass or more, the above-described effects can be expressed. By setting the amount of the electro-conductive agent to 18% by mass or less, the proportion of electro-conductive agent that contacts the electrolyte can be made low. When this proportion is low, the decomposition of electrolyte can be reduced during storage under high temperatures.

The positive electrode active material-containing layer may further contain electrically insulating particles. As the electrically insulating particles to be contained in the positive electrode active material-containing layer, electrically insulating particles that may be contained in the electrical insulation layer may be used. By containing electrically insulating particles, lithium ion conductivity in the positive electrode active material-containing layer can be improved, thus allowing the secondary battery to have high output.

The positive electrode including the positive electrode active material-containing layer may be produced by the following method, for example. First, a positive electrode active material, an electro-conductive agent, and a binder are suspended in a solvent to prepare a slurry. The slurry is applied onto one surface or both of reverse surfaces of a current collector. Next, the applied slurry is dried to form a layered stack of the positive electrode active material-containing layer and the current collector. Then, the layered stack is subjected to pressing. The positive electrode can be produced in this manner. Alternatively, the positive electrode may also be produced by the following method. First, a positive electrode active material, an electro-conductive agent, and a binder are mixed to obtain a mixture. Next, the mixture is formed into pellets. Then the positive electrode can be obtained by arranging the pellets on the current collector.

### 4) Current Collector

The current collector is preferably made of aluminum or an aluminum alloy including one or more elements selected from the group consisting of Mg, Ti, Zn, Ni, Cr, Mn, Fe, Cu, and Si. For example, an aluminum foil or an aluminum alloy foil including one or more elements selected from the group consisting of Mg, Ti, Zn, Ni, Cr, Mn, Fe, Cu, and Si may be used as the current collector.

As a current collector onto which a negative electrode active material-containing layer is formed and used in a negative electrode, i.e., a negative electrode current collector, a material which is electrochemically stable at the lithium insertion and extraction potential (vs. Li/Li⁺) of the negative electrode active material may be used. As the negative electrode current collector, copper, nickel, and stainless steel can be favorably used, in addition to the above described, aluminum and aluminum alloy.

The thickness of the negative electrode current collector is preferably from 5 µm to 20 µm. The negative electrode current collector having such a thickness can maintain balance between the strength and weight reduction of the negative electrode.

The current collector onto which a positive electrode active material-containing layer is formed and used in a positive electrode, i.e., a positive electrode current collector is preferably an aluminum foil, or an aluminum alloy foil including one or more elements selected from the group consisting of Mg, Ti, Zn, Ni, Cr, Mn, Fe, Cu, and Si.

The thickness of the aluminum foil or aluminum alloy foil as a positive electrode current collector is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

### 5) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

As the organic solvent, preferable is a mixed solvent where mixed are at least two solvents selected from the group consisting of propylene carbonate (PC), ethylene carbonate (EC), and diethyl carbonate (DEC), or a mixed solvent including γ-butyrolactone (GBL). By using these mixed solvents, a secondary battery having excellent high temperature properties can be obtained.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in nonaqueous electrolyte secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. The inorganic solid electrolyte includes, for example, the above described solid electrolyte that may be used as the electrically insulating particles.

### 6) Separator

The separator may be made of, for example, a porous film or synthetic resin nonwoven fabric including polyethylene, polypropylene, cellulose, or polyvinylidene fluoride (PVdF). In view of safety, a porous film made of polyethylene or polypropylene is preferred. This is because such a porous film melts at a fixed temperature and thus able to shut off current.

### 7) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm (mass ratio) or less.

The shape of the container member is not particularly limited. The shape of the container member may be, for example, flat (thin), square, cylinder, coin, or button-shaped. Depending on battery size, the container member may be, for example, a container member for compact batteries installed in mobile electronic devices, or container member for large batteries installed on vehicles such as two-wheeled to four-wheeled automobiles, railway cars, and the like.

### 8) Negative Electrode Terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

### 9) Positive Electrode Terminal

The positive electrode terminal is made of, for example, a material that is electrically stable in the potential range of 3 V to 5 V (vs. Li/Li⁺) relative to the redox potential of lithium, and has electrical conductivity. Examples of the material for the positive electrode terminal include aluminum and an aluminum alloy containing one or more element selected from the group consisting of Mg, Ti, Zn, Mn, Fe, Cu, Si, and the like. The positive electrode terminal is preferably made of the same material as the positive electrode current collector, in order to reduce contact resistance with the positive electrode current collector.

Next, the secondary battery according to the first approach will be more specifically described with reference to the drawings.

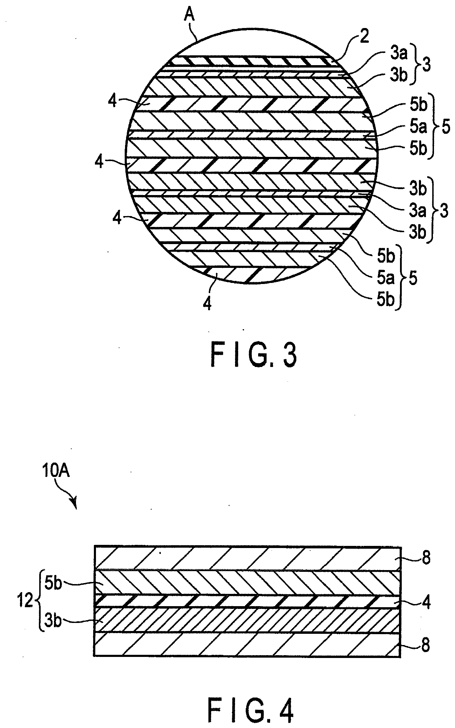

FIG. 2 is a cross-sectional view schematically showing an example of a secondary battery according to the first approach. FIG. 3 is an enlarged cross-sectional view of section A of the secondary battery shown in FIG. 2.

The secondary battery 100 shown in FIGS. 2 and 3 includes a bag-shaped container member 2 shown in FIG. 2, an electrode group 1 shown in FIGS. 2 and 3, and an electrolyte, which is not shown. The electrode group 1 and the electrolyte are housed in the container member 2. The electrolyte (not shown) is held in the electrode group 1.

The bag-shaped container member 2 is made of a laminate film including two resin layers and a metal layer sandwiched between the resin layers.

As shown in FIG. 2, the electrode group 1 is a wound electrode group in a flat form. The wound electrode group 1 in a flat form includes a negative electrode 3, an electrical insulation layer 4, and a positive electrode 5, as shown in FIG. 3. The electrical insulation layer 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 3. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 2, a negative electrode terminal 6 and positive electrode terminal 7 is positioned in the vicinity of the outer peripheral edge of the wound electrode group 1. The negative electrode terminal 6 is connected to the portion of the negative electrode current collector 3a of the negative electrode 3 positioned outermost. The positive electrode terminal 7 is connected to the positive electrode current collector 5a of the positive electrode 5 positioned outermost. The negative electrode terminal 6 and the positive electrode terminal 7 extend out from an opening of the bag-shaped container member 2. The bag-shaped container member 2 is heat-sealed by a thermoplastic resin layer arranged on the interior thereof.

The secondary battery according to the first approach is not limited to the secondary battery of the structure shown in FIGS. 2 and 3, and may be, for example, a battery of a structure as shown in FIGS. 4 to 6.

First, an electrode complex of a first example that the secondary battery according to the first approach may include will be described with reference to FIG. 4.

FIG. 4 is a schematic cross-sectional view of the electrode complex of the first example that the secondary battery according to the first approach may include.

An electrode complex 10A shown in FIG. 4 includes the positive electrode active material-containing layer 5b, an electrical insulation layer 4, the negative electrode active material-containing layer 3b, and two current collectors 8. As shown in FIG. 4, in the electrode complex 10A, the electrical insulation layer 4 is located between the positive electrode active material-containing layer 5b and the negative electrode active material-containing layer 3b. The electrical insulation layer 4 is in contact with one of the surfaces of the positive electrode active material-containing layer 5b and with one of the surfaces of the negative electrode active material-containing layer 3b. The surface of the positive electrode active material-containing layer 5b not in contact with the electrical insulation layer 4, is in contact with one current collector 8. Similarly, the surface of the negative electrode active material-containing layer 3b not in contact with the electrical insulation layer 4, is in contact with the other current collector 8. Thus, the electrode complex 10A has a structure in which one current collector 8, the negative electrode active material-containing layer 3b, the electrical insulation layer 4, the positive electrode active material-containing layer 5b, and the other current collector 8 are stacked in this order. In other words, the electrode complex 10A shown in FIG. 4 is an electrode unit including one electrode set 12 including the positive electrode active material-containing layer 5b, the negative electrode active material-containing layer 3b, and the electrical insulation layer 4 located therebetween.

A bipolar electrode like the electrode complex 10A can be produced, for example, in the following way. First, a negative electrode active material, an electro-conductive agent, and a binder are suspended in a solvent to prepare a slurry. The slurry is applied onto one surface of a current collector. Then, the applied slurry is dried to obtain a layered stack of a negative electrode active material-containing layer and the current collector. Subsequently, a positive electrode active material, an electro-conductive agent, and a binder are suspended in a solvent to prepare a slurry. The slurry is applied onto the other surface of the current collector. Then, the applied slurry is dried to obtain an electrode set in which a negative electrode active material-containing layer, a current collector, and a positive electrode active material-containing layer are stacked. After that, the electrode set is subjected to pressing. A bipolar electrode can thus be obtained.

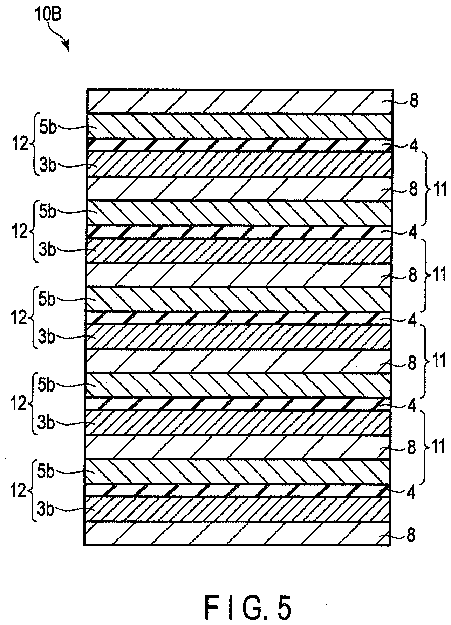

An electrode complex of a second example that the secondary battery according to the first approach may include will be described next with reference to FIG. 5.

FIG. 5 is a schematic cross-sectional view of the electrode complex of the second example that the secondary battery according to the first approach may include.

An electrode complex 10B shown in FIG. 5 includes a plural of, for example, four electrodes 11 each having a bipolar structure. As shown in FIG. 5, each electrode 11 includes the current collector 8, the positive electrode active material-containing layer 5b formed on one surface of the current collector 8, and the negative electrode active material-containing layer 3b formed on the other surface of the current collector 8. The electrodes 11 are arranged such that the positive electrode active material-containing layer 5b of one electrode 11 faces the negative electrode active material-containing layer 3b of another electrode 11 with the electrical insulation layer 4 located therebetween, as shown in FIG. 5.

The electrode complex 10B further includes two other electrical insulation layers 4, two other current collectors 8, one other positive electrode active material-containing layer 5b, and one other negative electrode active material-containing layer 3b. As shown in FIG. 5, the one positive electrode active material-containing layer 5b faces the negative electrode active material-containing layer 3b of the electrode 11 located uppermost in the stack of the electrodes 11 with one of the electrical insulation layers 4 located therebetween. The surface of this positive electrode active material-containing layer 5b, which is not in contact with the electrical insulation layer 4, is in contact with one of the current collectors 8. In addition, the one negative electrode active material-containing layer 3b faces the positive electrode active material-containing layer 5b of the electrode 11 located lowermost in the stack of the electrodes 11 with one of the electrical insulation layers 4 located therebetween. The surface of this negative electrode active material-containing layer 3b, which is not in contact with the electrical insulation layer 4, is in contact with one of the current collectors 8.

The electrode complex that the secondary battery according to the first approach may include can be made thin by making the positive electrode active material-containing layer, the electrical insulation layer, and the negative electrode active material-containing layer be in tight contact. For this reason, in the secondary battery according to the first approach, there may be stacked a multiple of electrode sets each including a positive electrode active material-containing layer, a negative electrode active material-containing layer, and an electrical insulation layer located therebetween. It is therefore possible to provide a thin secondary battery requiring little space that has a large capacity and suppressed self-discharge. Note that the electrode complex 10B of the example shown in FIG. 5 includes five electrode sets 12 each including the positive electrode active material-containing layer 5b, the negative electrode active material-containing layer 3b, and the electrical insulation layer 4 located therebetween. However, the number of electrode sets 12 can appropriately be selected based on the design of the shape and size of the battery.

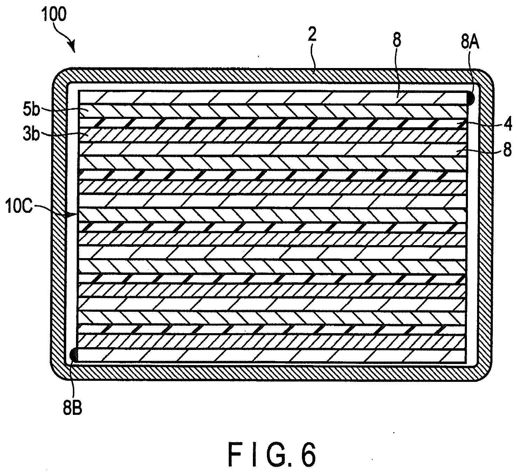

FIG. 6 is a schematic cross-sectional view of the secondary battery of an example according to the approach.

As shown in FIG. 6, a secondary battery 100 includes an electrode complex 10C housed in a container member 2. The electrode complex 10C shown in the figure has the same structure as the electrode complex 10B shown in FIG. 5. A positive electrode current collecting tab 8A is provided at one end of the current collector 8 located uppermost in the electrode complex 10C. On the other hand, a negative electrode current collecting tab 8B is provided at the other end of the current collector 8 located lowermost in the electrode complex 10C. A negative electrode terminal and a positive electrode terminal (neither are shown) are connected to the positive electrode current collecting tab 8A and the negative electrode current collecting tab 8B, respectively, and the negative electrode terminal and the positive electrode terminal extend to the outside of the container member 2.

FIG. 6 shows, as an example, the secondary battery 100 including the electrode complex 10C that includes five electrode sets each including the positive electrode active material-containing layer 5b, the negative electrode active material-containing layer 3b, and the electrical insulation layer 4 located therebetween, like the electrode complex 10B shown in FIG. 5. However, the secondary battery according to the first approach may include an electrode complex including electrode sets in a number other than five, for example, one electrode set, like the electrode complex 10A shown in FIG. 4, or an electrode complex including two or more electrode sets.

The secondary battery according to the first approach includes a negative electrode active material-containing layer, a positive electrode active material-containing layer, and an electrical insulation layer. The electrical insulation layer is provided between the negative electrode active material-containing layer and the positive electrode active material-containing layer and contains electrically insulating particles. The particle size distribution of the electrically insulating particles in the electrical insulation layer includes at least two peaks. In the secondary battery having this arrangement, self-discharge is suppressed.

### (Second Approach)

According to a second approach, a battery module is provided. The battery module according to the second approach includes plural secondary batteries according to the first approach.

In the battery module according to the second approach, each of the single batteries may be arranged electrically connected in series, in parallel, or in a combination of in-series connection and in-parallel connection.

An example of the battery module according to the second approach will be described next with reference to the drawings.

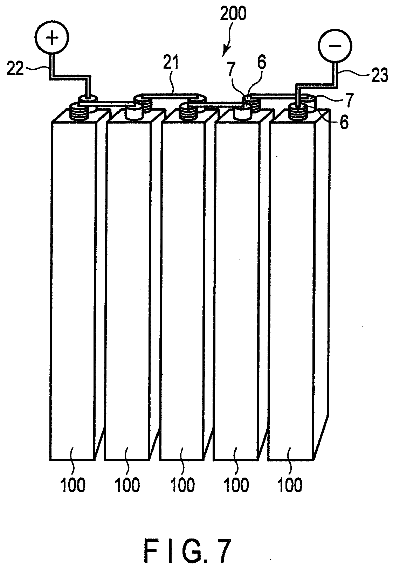

FIG. 7 is a perspective view schematically showing an example of the battery module according to the second approach. A battery module 200 shown in FIG. 7 includes five single-batteries 100, four bus bars 21, a positive electrode-side lead 22, and a negative electrode-side lead 23. Each of the five single-batteries 100 is a secondary battery according to the second approach.

Each bus bar 21 connects a negative electrode terminal 6 of one single-battery 100 and a positive electrode terminal 7 of the single-battery 100 positioned adjacent. The five single-batteries 100 are thus connected in series by the four bus bars 21. That is, the battery module 200 shown in FIG. 7 is a battery module of five in-series connection.

As shown in FIG. 7, the positive electrode terminal 7 of the single-battery 100 located at one end on the left among the row of the five single-batteries 100 is connected to the positive electrode-side lead 22 for external connection. In addition, the negative electrode terminal 6 of the single-battery 100 located at the other end on the right among the row of the five single-batteries 100 is connected to the negative electrode-side lead 23 for external connection.

The battery module according to the second approach includes the secondary battery according to the first approach. Hence, self-discharge is suppressed.

### (Third Approach)

According to a third approach, a battery pack is provided. The battery pack includes a battery module according to the second approach. The battery pack may include a single secondary battery according to the first approach, in place of the battery module according to the second approach.

The battery pack according to the third approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the third approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the third approach will be described with reference to the drawings.

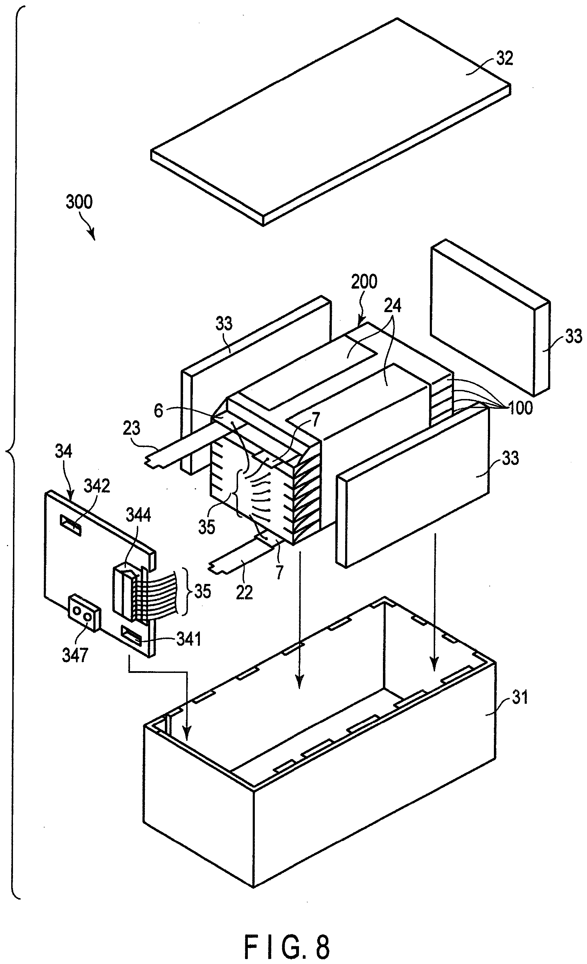

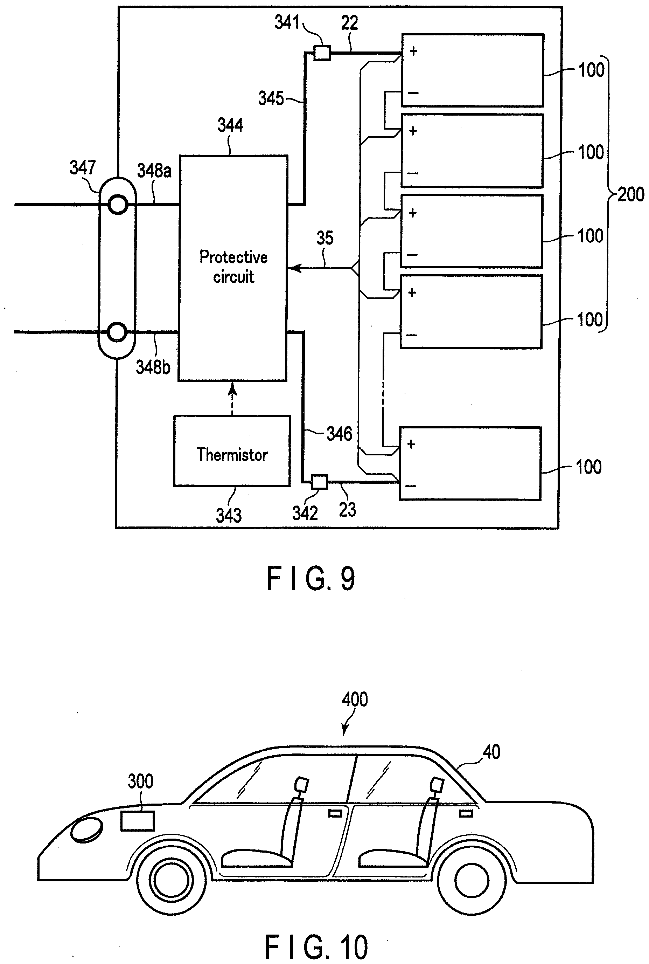

FIG. 8 is an exploded perspective view schematically showing an example of the battery pack according to the third approach. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

The housing container 31 is configured to house the protective sheets 33, the battery module 200, the printed wiring board 34, and the wires 35. The lid 32 covers the housing container 31 to house the battery module 200 and the like. Although not shown, opening(s) or connection terminal(s) for connecting to external device(s) and the like are provided on the housing container 31 and lid 32.

The protective sheets 33 are arranged on both inner surfaces of the housing container 31 along the long-side direction and on the inner surface along the short-side direction facing the printed wiring board 34 across the battery module 200 positioned therebetween. The protective sheets 33 are made of, for example, resin or rubber.

The battery module 200 includes plural single-batteries 100, a positive electrode-side lead 22, a negative electrode-side lead 23, and an adhesive tape 24. The battery module 200 may alternatively include only one single-battery 100.

A single-battery 100 has a structure shown in FIGS. 2 and 3, for example. Alternatively, the single-battery 100 may have the structure shown in FIG. 6. At least one of the plural single-batteries 100 is a secondary battery according to the first approach. The plural single-batteries 100 are stacked such that the negative electrode terminals 6 and the positive electrode terminals 7, which extend outside, are directed toward the same direction. The plural single-batteries 100 are electrically connected in series, as shown in FIG. 9. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape 24 fastens the plural single-batteries 100. The plural single-batteries 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural single-batteries 100.

One end of the positive electrode-side lead 22 is connected to the positive electrode terminal 7 of the single-battery 100 located lowermost in the stack of the single-batteries 100. One end of the negative electrode-side lead 23 is connected to the negative electrode terminal 6 of the single-battery 100 located uppermost in the stack of the single-batteries 100.

The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One principal surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through hole. By inserting the other end of the positive electrode-side lead 22 into the though hole, the positive electrode-side connector 341 and the positive electrode-side lead 22 become electrically connected. The negative electrode-side connector 342 is provided with a through hole. By inserting the other end of the negative electrode-side lead 23 into the though hole, the negative electrode-side connector 342 and the negative electrode-side lead 23 become electrically connected.

The thermistor 343 is fixed to one principal surface of the printed wiring board 34. The thermistor 343 detects the temperature of each single-battery 100 and transmits detection signals to the protective circuit 344.

The external power distribution terminal 347 is fixed to the other principal surface of the printed wiring board 34. The external power distribution terminal 347 is electrically connected to device(s) that exists outside the battery pack 300.

The protective circuit 344 is fixed to the other principal surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 35.

The protective circuit 344 controls charge and discharge of the plural single-batteries 100. The protective circuit 344 is also configured to cut-off electric connection between the protective circuit 344 and the external power distribution terminal 347 to external device(s), based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 is a signal indicating detection of over-charge, over-discharge, and overcurrent of the single-battery (single-batteries) 100. When detecting over-charge or the like for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 344, a circuit included in a device (for example, an electronic device or an automobile) that uses the battery pack 300 as a power source may be used.

Such a battery pack 300 is used, for example, in applications where excellent cycle performance is demanded when a large current is extracted. More specifically, the battery pack 300 is used as, for example, a power source for electronic devices, a stationary battery, an onboard battery for vehicles, or a battery for railway cars. An example of the electronic device is a digital camera. The battery pack 300 is particularly favorably used as an onboard battery.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

The battery pack according to the third approach includes the secondary battery according to the first approach or the battery module according to the second approach. Hence, self-discharge is suppressed.

### (Fourth Approach)

According to a fourth approach, a vehicle is provided. The battery pack according to the third approach is installed on this vehicle.

In the vehicle according to the fourth approach, the battery pack is configured, for example, to recover regenerative energy from motive force of the vehicle.

Examples of the vehicle according to the fourth approach include two-wheeled to four-wheeled hybrid electric automobiles, two-wheeled to four-wheeled electric automobiles, electric assist bicycles, and railway cars.

In the vehicle according to the fourth approach, the installing position of the battery pack is not particularly limited. For example, the battery pack may be installed in the engine compartment of the vehicle, in rear parts of the vehicle, or under seats.

An example of the vehicle according to the fourth approach is explained below, with reference to the drawings.

FIG. 10 is a cross-sectional view schematically showing an example of a vehicle according to the fourth approach.

A vehicle 400, shown in FIG. 10 includes a vehicle body 40 and a battery pack 300 according to the third approach.

In FIG. 10, the vehicle 400 is a four-wheeled automobile. As the vehicle 400, for example, two-wheeled to four-wheeled hybrid electric automobiles, two-wheeled to four-wheeled electric automobiles, electric assist bicycles, and railway cars may be used.

This vehicle 400 may have plural battery packs 300 installed. In such a case, the battery packs 300 may be connected in series, connected in parallel, or connected in a combination of in-series connection and in-parallel connection.

The battery pack 300 is installed in an engine compartment located at the front of the vehicle body 40. The location of installing the battery pack 300 is not particularly limited. The battery pack 300 may be installed in rear sections of the vehicle body 40, or under a seat. The battery pack 300 may be used as a power source of the vehicle 400. The battery pack 300 can also recover regenerative energy of motive force of the vehicle 400.

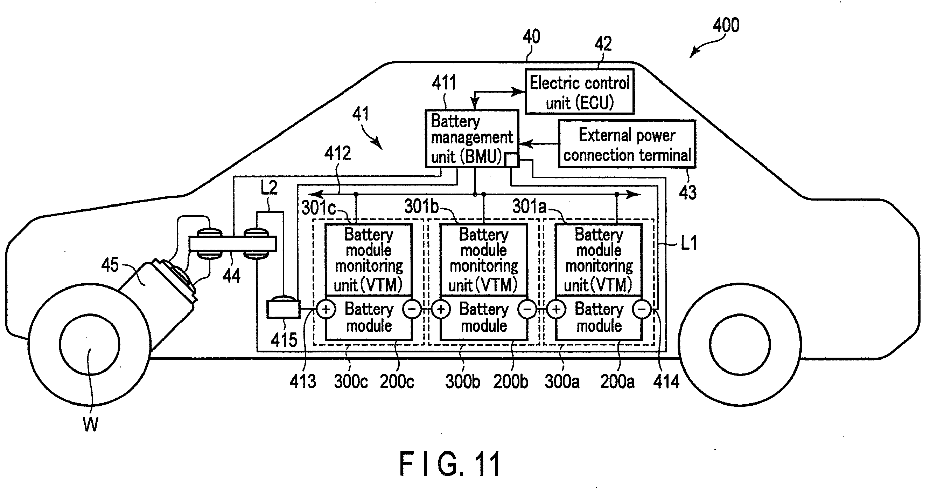

Next, with reference to FIG. 11, an aspect of operation of the vehicle according to the fourth approach is explained.

FIG. 11 is a view schematically showing another example of the vehicle according to the fourth approach. A vehicle 400, shown in FIG. 11, is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 11, the position of the vehicle power source 41 installed in the vehicle 400 is schematically shown.

The vehicle power source 41 includes plural (for example, three) battery packs 300a, 300b, and 300c, a battery management unit (BMU) 411, and a communication bus 412.

The three battery packs 300a, 300b and 300c are electrically connected in series. The battery pack 300a includes a battery module 200a and a battery module monitoring unit (VTM: voltage temperature monitoring) 301a. The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c and collects information such as voltages or temperatures of the single-batteries 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 11) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near the switch elements.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 42, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted into the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver or the like, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the fourth approach includes the battery pack according to the third approach. Hence, since self-discharge of the battery pack is suppressed, reliability of the vehicle is high.

### [Examples]

Examples will be described below in detail.

### (Example 1)

### <Production of Negative Electrode>

As a negative electrode active material, 90 mass% of a powder of lithium titanate having a spinel structure (Li₄Ti₅O₁₂) were used. As an electro-conductive agent, 7 mass% of graphite were used. As a binder, 3 mass% of PVdF were used. These components were mixed with N-methylpyrrolidone (NMP) to prepare a slurry. The slurry was applied onto both of reverse surfaces of a current collector made of an aluminum foil having a thickness of 15 µm, pre-dried at 80°C, and then dried at 130°C, thereby obtaining a stack of the negative electrode active material and the current collector. The stack was pressed, thereby obtaining a negative electrode.

### <Production of Positive Electrode>

As a positive electrode active material, lithium cobalt oxide (LiCoO₂) was used. Relative to 90 mass% of lithium cobalt oxide, 3 mass% of acetylene black and 3 mass% of graphite were used as electro-conductive agents. As a binder, 4 mass% of polyvinylidene fluoride (PVdF) were used. The above components were added to N-methylpyrrolidone (NMP) and mixed to prepare a slurry. The slurry was applied onto both of reverse surfaces of a current collector made of an aluminum foil having a thickness of 15 µm and dried, thereby obtaining a stack of the positive electrode active material and the current collector. The stack was pressed, thereby obtaining a positive electrode.

### <Production of Electrical Insulation Layer>

As electrically insulating particles, 92 mass% of Li₇La₃Zr₂O₁₂ powder were used. In the particle size distribution of the used electrically insulating particles, the particle size (the first particle size) corresponding to the peak having the highest peak strength (the first peak) and the particle size (the second particle size) corresponding to the peak having the next highest peak strength (the second peak) were 0.11 µm and 0.30 µm, respectively. As binders, 3 mass% of styrene-butadiene rubber and 3 mass% of carboxymethyl cellulose were used. The above components were added to water and mixed to prepare a slurry. The slurry was applied to a thickness of 10 µm onto both of reverse surfaces of the above-described negative electrode and dried.

### <Production of Electrode Group>

The positive electrode and the negative electrode with the electrical insulation layers formed thereon were stacked to obtain a stack. The stack was spirally wound. The wound stack was hot-pressed at 80°C, thereby creating a flat electrode group. The obtained electrode group was housed in a pack made of a 0.1 mm thick laminated film having a three-layer structure of nylon layer / aluminum layer / polyethylene layer and dried at 80°C for 16 hour in vacuum.

### <Preparation of Liquid Nonaqueous Electrolyte>

In a solvent mixture (volume ratio = 1 : 2) of propylene carbonate (PC) and diethyl carbonate (DEC), 1 mol/L of LiPF₆ was dissolved as an electrolyte salt, thereby obtaining a liquid nonaqueous electrolyte.

The liquid nonaqueous electrolyte was put into the laminated film pack housing the electrode group, and the pack was completely sealed by heat sealing. A secondary battery was thus obtained.

### (Examples 2 to 9)

Secondary batteries were produced in accordance with the same procedure as in Example 1 except that in the particle size distribution of the electrically insulating particles, the first particle size and the second particle size were set to values shown in Table 2.

### (Examples 10 to 14)

Secondary batteries were produced in accordance with the same procedure as in Example 1 except that electrically insulating particles of materials shown in Table 1 were used as the electrically insulating particles, and in the particle size distribution, the first particle size and the second particle size were set to values shown in Table 2.

### (Examples 15 to 17)

As the negative electrode active materials, compounds shown in Table 1 were used. In the particle size distribution of the electrically insulating particles, the first particle size and the second particle size were set to values shown in Table 2. Secondary batteries were produced in accordance with the same procedure as in Example 1 except these points.

### (Examples 18 and 19)

As the positive electrode active materials, compounds shown in Table 1 were used. In the particle size distribution of the electrically insulating particles, the first particle size and the second particle size were set to values shown in Table 2. Secondary batteries were produced in accordance with the same procedure as in Example 1 except these points.

### (Example 20)

A secondary battery was produced in accordance with the same procedure as in Example 1 except that when producing the electrical insulation layer, the slurry of the material of the electrical insulation layer was applied onto both of reverse surfaces of the positive electrode, instead of applying the slurry onto both surfaces of the negative electrode.

### (Example 21)

A secondary battery was produced in accordance with the same procedure as in Example 1 except that when producing the electrical insulation layer, the slurry of the material of the electrical insulation layer was applied onto both of reverse surfaces of the negative electrode and both of reverse surfaces of the positive electrode, respectively, to a thickness of 5 µm, instead of applying the slurry onto both surfaces of the negative electrode to a thickness of 10 µm.

### (Example 22)

A secondary battery was produced in accordance with the same procedure as in Example 1 except that a particle mixture of Li₇La₃Zr₂O₁₂ powder having an average particle size of 0.50 µm and Al₂O₃ powder having an average particle size of 1.0 µm was used as the electrically insulating particles.

### (Comparative Examples 1 to 4)

Secondary batteries were produced in accordance with the same procedure as in Example 1 except that electrically insulating particles of a particle size distribution having a single peak corresponding to the first particle size shown in Table 4 were used as the electrically insulating particles.

### (Comparative Examples 5 to 16)

Secondary batteries were produced respectively in accordance with the same procedures as in Examples 10 to 21 except that electrically insulating particles of a particle size distribution having a single peak corresponding to the first particle size shown in Table 4 were used as the electrically insulating particles.

### (Comparative Example 17)

A secondary battery was produced in accordance with the same procedure as in Example 1 except that an electrical insulation layer was not produced, and an electrode group was produced using a stack obtained by stacking the positive electrode, a cellulose separator having a thickness of 15 µm, and the negative electrode.

### (Comparative Example 18)

A secondary battery was produced in accordance with the same procedure as in Example 1 except that an electrical insulation layer was not produced, and an electrode group was produced using a stack obtained by stacking the positive electrode, a cellulose separator having a thickness of 6 µm, and the negative electrode.

Table 1 shows the materials used for the electrically insulating particles, the negative electrode active material, and the positive electrode active material in each of Examples 1 to 22. Table 1 also shows the electrode onto which the material of the electrical insulation layer was applied when producing the electrical insulation layer.

**[Table 1]**

| | Electrically insulating particle | Negative electrode active material | Positive electrode active material | Electrode onto which the electrical insulation layer was applied |
|---|---|---|---|---|
| Example 1 | Li₇La₃Zr₂O₁₂ | Li₄Ti₅O₁₂ | LiCoO₂ | Negative electrode |
| Example 2 | Li₇La₃Zr₂O₁₂ | Li₄Ti₅O₁₂ | LiCoO₂ | Negative electrode |
| Example 3 | Li₇La₃Zr₂O₁₂ | Li₄Ti₅O₁₂ | LiCoO₂ | Negative electrode |
| Example 4 | Li₇La₃Zr₂O₁₂ | Li₄Ti₅O₁₂ | LiCoO₂ | Negative electrode |
| Example 5 | Li₇La₃Zr₂O₁₂ | Li₄Ti₅O₁₂ | LiCoO₂ | Negative electrode |
| Example 6 | Li₇La₃Zr₂O₁₂ | Li₄Ti₅O₁₂ | LiCoO₂ | Negative electrode |
| Example 7 | Li₇La₃Zr₂O₁₂ | Li₄Ti₅O₁₂ | LiCoO₂ | Negative electrode |
| Example 8 | Li₇La₃Zr₂O₁₂ | Li₄Ti₅O₁₂ | LiCoO₂ | Negative electrode |
| Example 9 | Li₇La₃Zr₂O₁₂ | Li₄Ti₅O₁₂ | LiCoO₂ | Negative electrode |
| Example 10 | Li_{1.3}Al_{0.3}Ti_{1.7} (PO₄) ₃ | Li₄Ti₃O₁₂ | LiCoO₂ | Negative electrode |
| Example 11 | La_{0.56}Li_{0.33}TiO₃ | Li₄Ti₅O₁₂ | LiCoO₂ | Negative electrode |
| Example 12 | Al₂O₃ | Li₄Ti₅O₁₂ | LiCoO₂ | Negative electrode |
| Example 13 | MgO | Li₄Ti₅O₁₂ | LiCoO₂ | Negative electrode |
| Example 14 | ZrO₂ | Li₄Ti₅O₁₂ | LiCoO₂ | Negative electrode |
| Example 15 | Li₇La₃Zr₂O₁₂ | Li₂Na₂Ti₆O₁₄ | LiCoO₂ | Negative electrode |
| Example 16 | Li₇La₃Zr₂O₁₂ | Nb₂TiO₇ | LiCoO₂ | Negative electrode |
| Example 17 | Li₇La₃Zr₂O₁₂ | graphite | LiCoO₂ | Negative electrode |
| Example 18 | Li₇La₃Zr₂O₁₂ | Li₄Ti₅O₁₂ | LiNi_{0.5}Co_{0.2}Mn_{0.3}O₂ | Negative electrode |
| Example 19 | Li₇La₃Zr₂O₁₂ | Li₄Ti₅O₁₂ | LiMn₂O₄ | Negative electrode |
| Example 20 | Li₇La₃Zr₂O₁₂ | Li₄Ti₅O₁₂ | LiCoO₂ | Positive electrode |
| Example 21 | Li₇La₃Zr₂O₁₂ | Li₄Ti₅O₁₂ | LiCoO₂ | Positive electrode and Negative electrode |
| Example 22 | Li₇La₃Zr₂O₁₂ and Al₂O₃ | Li₄Ti₅O₁₂ | LiCoO₂ | Negative electrode |

Table 2 shows the particle size (the first particle size) corresponding to the peak having the highest peak strength (the first peak) and the particle size (the second particle size) corresponding to the peak having the next highest peak strength (the second peak) in the particle size distribution of the electrically insulating particles used in each of Examples 1 to 22. The peak strength ratio (first peak strength / second peak strength) between the peak strength of the first peak and the peak strength of the second peak is also shown.

**[Table 2**

| | First particle size (µm) | Second particle size (µm) | Peak strength of first peak / peak strength of second peak |
|---|---|---|---|
| Example 1 | 0.11 | 0.30 | 2 |
| Example 2 | 0.11 | 1.0 | 2 |
| Example 3 | 0.11 | 5.0 | 2 |
| Example 4 | 0.30 | 1.0 | 2 |
| Example 5 | 0.30 | 5.0 | 2 |
| Example 6 | 0.50 | 1.0 | 2 |
| Example 7 | 0.50 | 5.0 | 2 |
| Example 8 | 1.0 | 5.0 | 2 |
| Example 9 | 1.0 | 0.50 | 2 |
| Example 10 | 0.50 | 1.0 | 2 |
| Example 11 | 0.50 | 1.0 | 2 |
| Example 12 | 0.50 | 1.0 | 2 |
| Example 13 | 0.50 | 1.0 | 2 |
| Example 14 | 0.50 | 1.0 | 2 |
| Example 15 | 0.50 | 1.0 | 2 |
| Example 16 | 0.50 | 1.0 | 2 |
| Example 17 | 0.50 | 1.0 | 2 |
| Example 18 | 0.50 | 1.0 | 2 |
| Example 19 | 0.50 | 1.0 | 2 |
| Example 20 | 0.50 | 1.0 | 2 |
| Example 21 | 0.50 | 1.0 | 2 |
| Example 22 | 0.50 (LLZ) | 1.0 (Al₂O₃) | 2 |

Table 3 shows the materials used for the electrically insulating particles, the negative electrode active material, and the positive electrode active material in each of Comparative Examples 1 to 18. Table 3 also shows the electrode onto which the material of the electrical insulation layer was applied when producing the electrical insulation layer.

**[Table 3]**

| | Electrically insulating particle | Negative electrode active material | Positive electrode active material | Electrode onto which the electrical insulation layer was applied |
|---|---|---|---|---|
| Comparative Example 1 | Li₇La₃Zr₂O₁₂ | Li₄Ti₅O₁₂ | LiCoO₂ | Negative electrode |
| Comparative Example 2 | Li₇La₃Zr₂O₁₂ | Li₄Ti₅O₁₂ | LiCoO₂ | Negative electrode |
| Comparative Example 3 | Li₇La₃Zr₂O₁₂ | Li₄Ti₅O₁₂ | LiCoO₂ | Negative electrode |
| Comparative Example 4 | Li₇La₃Zr₂O₁₂ | Li₄Ti₅O₁₂ | LiCoO₂ | Negative electrode |
| Comparative Example 5 | Li_{1.3}Al_{0..3}Ti_{1.7} (PO₄)₃ | Li₄Ti₅O₁₂ | LiCoO₂ | Negative electrode |
| Comparative Example 6 | La_{0.56}Li_{0.33}TiO₃ | Li₄Ti₅O₁₂ | LiCoO₂ | Negative electrode |
| Comparative Example 7 | Al₂O₃ | Li₄Ti₅O₁₂ | LiCoO₂ | Negative electrode |
| Comparative Example 8 | MgO | Li₄Ti₅O₁₂ | LiCoO₂ | Negative electrode |
| Comparative Example 9 | ZrO₂ | Li₄Ti₅O₁₂ | LiCoO₂ | Negative electrode |
| Comparative Example 10 | Li₇La₃Zr₂O₁₂ | Li₂Na₂Ti₆O₁₄ | LiCoO₂ | Negative electrode |
| Comparative Example 11 | Li₇La₃Zr₂O₁₂ | Nb₂TiO₇ | LiCoO₂ | Negative electrode |
| Comparative Example 12 | Li₇La₃Zr₂O₁₂ | graphite | LiCoO₂ | Negative electrode |
| Comparative Example 13 | Li₇La₃Zr₂O₁₂ | Li₄Ti₅O₁₂ | LiNi_{0.5}Co_{0.2}Mn_{0.3}O₂ | Negative electrode |
| Comparative Example 14 | Li₃La₃Zr₂O₃₂ | Li₄Ti₅O₁₇ | LiMn₂O₄ | Negative electrode |
| Comparative Example 15 | Li₇La₃Zr₂O₁₂ | Li₄Ti₅O₁₂ | LiCoO₂ | Positive electrode |
| Comparative Example 16 | Li-₇La₃Zr₂O₁₂ | Li₄Ti₅O₁₂ | LiCoO₂ | Positive electrode and Negative electrode |
| Comparative Example 17 | none (15 µm thick cellulose separator used in place of electrical insulation layer) | Li₄Ti₅O₁₂ | LiCoO₂ | - |
| Comparative Example 18 | none (6 µm thick cellulose separator used in place of electrical insulation layer) | Li₄Ti₅O₁₂ | LiCoO₂ | - |

Table 4 shows the particle sizes corresponding to the particle size distribution of the electrically insulating particles used in each of Comparative Examples 1 to 16. The peak strength ratio (first peak strength / second peak strength) between the peak strength of the first peak and the peak strength of the second peak is also shown. Note that in each of Comparative Examples 17 and 18, there was no particle size distribution because a cellulose separator was used in place of the electrical insulation layer.

**[Table 4]**

| | First particle size (µm) | Second particle size (µm) | Peak strength of first peak / peak strength of second peak |
|---|---|---|---|
| Comparative Example 1 | 0.11 | - | - |
| Comparative Example 2 | 0.50 | - | - |
| Comparative Example 3 | 1.0 | - | - |
| Comparative Example 4 | 5.0 | - | - |
| Comparative Example 5 | 0.50 | - | - |
| Comparative Example 6 | 0.50 | - | - |
| Comparative Example 7 | 0.50 | - | - |
| Comparative Example 8 | 0.50 | - | - |
| Comparative Example 9 | 0.50 | - | - |
| Comparative Example 10 | 0.50 | - | - |
| Comparative Example 11 | 0.50 | - | - |
| Comparative Example 12 | 0.50 | - | - |
| Comparative Example 13 | 0.50 | - | - |
| Comparative Example 14 | 0.50 | - | - |
| Comparative Example 15 | 0.50 | - | - |
| Comparative Example 16 | 0.50 | - | - |
| Comparative Example 17 | - | - | - |
| Comparative Example 18 | - | - | - |

Each of the secondary batteries obtained in Examples 1 to 22 and the secondary batteries obtained in Comparative Examples 1 to 18 was charged up to 2.5 V and left to stand for 4 weeks under a 60°C environment, and thereafter, the remaining capacity was measured. The remaining capacity (%) was defined as remaining capacity (%) = "capacity after storage / capacity before storage × 100". In addition, the thickness and porosity of the electrical insulation layer in each secondary battery was examined by the above-described method.

Table 5 shows the results in Examples 1 to 22. Table 5 also shows the thickness and porosity of the electrical insulation layer examined in each secondary battery.

**[Table 5]**

| | Remaining capacity (%) | Thickness of electrical insulation layer (µm) | Porosity of electrical insulation layer (%) |
|---|---|---|---|
| Example 1 | 73 | 5 | 20 |
| Example 2 | 76 | 5 | 20 |
| Example 3 | 73 | 5 | 20 |
| Example 4 | 80 | 5 | 20 |
| Example 5 | 80 | 5 | 20 |
| Example 6 | 81 | 5 | 20 |
| Example 7 | 80 | 5 | 20 |
| Example 8 | 78 | 5 | 20 |
| Example 9 | 72 | 5 | 20 |
| Example 10 | 81 | 5 | 20 |
| Example 11 | 80 | 5 | 20 |
| Example 12 | 82 | 5 | 20 |
| Example 13 | 81 | 5 | 20 |
| Example 14 | 82 | 5 | 20 |
| Example 15 | 80 | 5 | 20 |
| Example 16 | 80 | 5 | 20 |
| Example 17 | 71 | 5 | 20 |
| Example 18 | 80 | 5 | 20 |
| Example 19 | 81 | 5 | 20 |
| Example 20 | 81 | 5 | 20 |
| Example 21 | 83 | 5 | 20 |
| Example 22 | 81 | 6 | 20 |

Table 6 shows the results in Comparative Examples 1 to 18. Table 6 also shows the thickness and porosity of the electrical insulation layer examined in each secondary battery. Note that for each of Comparative Examples 17 and 18, the thickness of the cellulose separator is shown.

**[Table 6]**

| | Remaining capacity (%) | Thickness of electrical insulation layer (µm) | Porosity of electrical insulation layer (%) |
|---|---|---|---|
| Comparative Example 1 | 65 | 5 | 20 |
| Comparative Example 2 | 69 | 5 | 20 |
| Comparative Example 3 | 64 | 5 | 20 |
| Comparative Example 4 | 60 | 5 | 20 |
| Comparative Example 5 | 65 | 5 | 20 |
| Comparative Example 6 | 62 | 5 | 20 |
| Comparative Example 7 | 69 | 5 | 20 |
| Comparative Example 8 | 68 | 5 | 20 |
| Comparative Example 9 | 68 | 5 | 20 |
| Comparative Example 10 | 67 | 5 | 20 |
| Comparative Example 11 | 68 | 5 | 20 |
| Comparative Example 12 | 59 | 5 | 20 |
| Comparative Example 13 | 67 | 5 | 20 |
| Comparative Example 14 | 68 | 5 | 20 |
| Comparative Example 15 | 68 | 5 | 20 |
| Comparative Example 16 | 70 | 5 | 20 |
| Comparative Example 17 | 81 | 15 (thickness of cellulose separator) | 20 |
| Comparative Example 18 | 61 | 6 (thickness of cellulose separator) | 20 |

As can be seen from the results shown in Tables 5 and 6, the remaining capacity was higher in the secondary batteries produced in Examples 1 to 22 than in the secondary batteries produced in Comparative Examples 1 to 16 and 18. That is, it can be seen that self-discharge was less in the secondary batteries of Examples 1 to 22 than in the secondary batteries of Comparative Examples 1 to 16 and 18.

Compared are the results of Example 6 and Examples 15 to 17, which have the same particle size distribution for the electrically insulating particles in the electrical insulation layer. It can be seen from the comparison that the self-discharge amount changes depending on the compound used as the negative electrode active material, also. The remaining capacity in Example 17, in which graphite was used as the negative electrode active material, was lower than in other examples but higher than the remaining capacity in Comparative Example 12 in which graphite was similarly used. In each of Examples 15 and 16 as well, the remaining capacity was higher than in Comparative Examples 10 and 11 in which the same negative electrode active material was used.

As can be seen from comparison between the result of Example 6 and the results of Examples 18 and 19, even in a case in which various positive electrode active materials are used, when electrically insulating particles including at least two peaks in the particle size distribution are used for the electrical insulation layer, the same degree of remaining capacity can be obtained.

The secondary battery of Comparative Example 17 exhibited the same degree of remaining capacity as in the secondary batteries of Examples 1 to 22. In Comparative Example 17, however, the cellulose separator having a thickness (15 µm) almost three times larger than the thickness of the electrical insulation layer in each of Examples 1 to 22 was used, in order to achieve the same degree of remaining capacity as in the secondary batteries of Examples 1 to 22. The secondary battery of Comparative Example 17 was thick, and a high energy density could not be obtained.

As can be seen from comparison between Examples 1 to 22 and Comparative Examples 1 to 18, each secondary battery that used the electrical insulation layer containing electrically insulating particles including at least two peaks in the particle size distribution was able to suppress self-discharge while reducing the interval between the negative electrode layer and the positive electrode layer. This indicates that when electrically insulating particles including at least two peaks in the particle size distribution are used for the electrical insulation layer, it is possible to increase the energy density and suppress self-discharge.

### (Examples 23 to 28)

Secondary batteries were produced in accordance with the same procedure as in Example 1 except that in the particle size distribution of the electrically insulating particles, the first particle size and the second particle size were set to values shown in Table 8.

The first particle size and the second particle size were controlled as follows. For each of the examples, first electrically insulating particles (Li₇La₃Zr₂O₁₂ powder) having a particle size distribution including a single peak corresponding to the first particle size of the value shown in Table 8 were provided. Second electrically insulating particles (Li₇La₃Zr₂O₁₂ powder) having a particle size distribution including a single peak corresponding to the second particle size of the value shown in Table 8 were also provided. The first electrically insulating particles and the second electrically insulating particles were mixed. In this manner, the particle size (the first particle size) corresponding to the peak having the highest peak strength (the first peak) and the particle size (the second particle size) corresponding to the peak having the next highest peak strength (the second peak) were set to values shown in Table 8.

### (Examples 29 to 35)

In the particle size distribution of the electrically insulating particles, the first particle size and the second particle size were set to values shown in Table 8. The peak strength ratio (first peak strength / second peak strength), between the peak strength of the peak having the highest peak strength (the first peak) and the peak strength of the peak having the next highest peak strength (the second peak) in the particle size distribution of the electrically insulating particles, was set to values shown in Table 8. Secondary batteries were produced in accordance with the same procedure as in Example 1 except these points.

The first particle sizes and second particle sizes were controlled in the same manner as for Examples 23 to 28. The peak strength ratio between the first peak and the second peak were controlled by varying the mixing proportions between the first electrically insulating particles and the second electrically insulating particles. For example, when the proportion of the first electrically insulating particles is increased, the value of the peak strength intensity increases.

Table 7 shows the materials used for the electrically insulating particles, the negative electrode active material, and the positive electrode active material in each of Examples 23 to 35. Table 7 also shows the electrode onto which the material of the electrical insulation layer was applied when producing the electrical insulation layer.

**[Table 7]**

| | Electrically insulating particle | Negative electrode active material | Positive electrode active material | Electrode onto which the electrical insulation layer was applied |
|---|---|---|---|---|
| Example 23 | Li₇La₃Zr₂O₁₂ | Li₄Ti₅O₁₂ | LiCoO₂ | Negative electrode |
| Example 24 | Li₇La₃Zr₂O₁₂ | Li₉Ti₅O₁₂ | LiCoO₂ | Negative electrode |
| Example 25 | Li₇La₃Zr₂O₁₂ | Li₄Ti₅O₁₂ | LiCoO₂ | Negative electrode |
| Example 26 | Li₇La₃Zr₂O₁₂ | Li₄Ti₅O₁₂ | LiCoO₂ | Negative electrode |
| Example 27 | Li₇La₃Zr₂O₁₂ | Li₄Ti₅O₁₂ | LiCoO₂ | Negative electrode |
| Example 28 | Li₇La₃Zr₂O₁₂ | Li₄Ti₅O₁₂ | LiCoO₂ | Negative electrode |
| Example 29 | Li₇La₃Zr₂O₁₂ | Li₄Ti₅O₁₂ | LiCoO₂ | Negative electrode |
| Example 30 | Li₇La₃Zr₂O₁₂ | Li₄Ti₅O₁₂ | LiCoO₂ | Negative electrode |
| Example 31 | Li₇La₃Zr₂O₁₂ | Li₄Ti₅O₁₂ | LiCoO₂ | Negative electrode |
| Example 32 | Li₇La₃Zr₂O₁₂ | Li₄Ti₅O₁₂ | LiCoO₂ | Negative electrode |
| Example 33 | Li₇La₃Zr₂O₁₂ | Li₄Ti₅O₁₂ | LiCoO₂ | Negative electrode |
| Example 34 | Li₇La₃Zr₂O₁₂ | Li₄Ti₅O₁₂ | LiCoO₂ | Negative electrode |
| Example 35 | Li₇La₃Zr₂O₁₂ | Li₄Ti₅O₁₂ | LiCoO₂ | Negative electrode |

Table 8 shows the particle size (the first particle size) corresponding to the peak having the highest peak strength (the first peak) and the particle size (the second particle size) corresponding to the peak having the next highest peak strength (the second peak) in the particle size distribution of the electrically insulating particles used in each of Examples 23 to 35. The peak strength ratio (first peak strength / second peak strength) between the peak strength of the first peak and the peak strength of the second peak is also shown.

**[Table 8]**

| | First particle size (µm) | Second particle size (µm) | Peak strength of first peak / peak strength of second peak |
|---|---|---|---|
| Example 23 | 0.09 | 0.30 | 2 |
| Example 24 | 0.09 | 1.0 | 2 |
| Example 25 | 0.09 | 5.0 | 2 |
| Example 26 | 0.90 | 0.30 | 2 |
| Example 27 | 0.90 | 0.50 | 2 |
| Example 28 | 0.90 | 5.0 | 2 |
| Example 29 | 0.50 | 1.0 | 0.9 |
| Example 30 | 0.50 | 1.0 | 1.1 |
| Example 31 | 0.50 | 1.0 | 1.3 |
| Example 32 | 0.50 | 1.0 | 4.5 |
| Example 33 | 0.50 | 1.0 | 6 |
| Example 34 | 0.50 | 1.0 | 9 |
| Example 35 | 0.50 | 1.0 | 12 |

### (Examples 36 to 47)

Electrically insulating particles of materials shown in Table 9 were used as the electrically insulating particles, and in the particle size distribution, the first particle size and the second particle size were set to values shown in Table 10. As the negative electrode active materials and the positive electrode active materials, compounds shown in Table 9 were used. Secondary batteries were produced in accordance with the same procedure as in Example 1 except these points.

### (Example 48)

A secondary battery was produced in accordance with the same procedure as in Example 41 except that when producing the electrical insulation layer, the slurry of the material of the electrical insulation layer was applied onto both of reverse surfaces of the positive electrode, instead of applying the slurry onto both surfaces of the negative electrode.

### (Example 49)

A secondary battery was produced in accordance with the same procedure as in Example 41 except that when producing the electrical insulation layer, the slurry of the material of the electrical insulation layer was applied onto both of reverse surfaces of the negative electrode and both of reverse surfaces of the positive electrode, respectively, to a thickness of 5 µm, instead of applying the slurry onto both surfaces of the negative electrode to a thickness of 10 µm.

### (Examples 50 to 51)

Secondary batteries were produced in accordance with the same procedure as in Example 41 except that compounds shown in Table 9 were used as the positive electrode active materials.

### (Examples 52 to 58)

Secondary batteries were produced in accordance with the same procedure as in Example 51 except that the ratio (first peak strength / second peak strength) between the peak, strength of the first peak and the peak strength of the second peak in the particle size distribution of the electrically insulating particles, was set to values shown in Table 10.

Table 9 shows the materials used for the electrically insulating particles, the negative electrode active material, and the positive electrode active material in each of Examples 36 to 58. Table 9 also shows the electrode onto which the material of the electrical insulation layer was applied when producing the electrical insulation layer.

**[Table 9]**

| | Electrically insulating particle | Negative electrode active material | Positive electrode active material | Electrode onto which the electrical insulation layer was applied |
|---|---|---|---|---|
| Example 36 | Li_{1.3}Al_{0.3}Ti_{1.7} (PO₄)**₃** | Nb₂TiO₇ | LiNi_{0.5}Co_{0.5}Mn_{0.3}O₂ | Negative electrode |
| Example 37 | Li_{1.3}Al_{0.3}Ti_{1.7} (PO₄)**₃** | Nb₂TiO₇ | LiNi₀.₅Co₀.₂Mn₀.₃O₂ | Negative electrode |
| Example 38 | Li_{1.3}Al_{0.3}Ti_{1.7} (PO₄)₃ | Nb₂TiO₇ | LiNi_{0.5}Co_{0.2}Mn_{0.3}O₂ | Negative electrode |
| Example 39 | Li₁.₃Al_{0.3}Ti₁.₇ (PO₄)₃ | Nb₂TiO₇ | LiNi_{0.5}Co_{0.5}Mn_{0.3}O₂ | Negative electrode |
| Example 40 | Li₁.₃Al_{0.3}Ti₁.₇ (PO₄)₃ | Nb₂TiO₇ | LiNi_{0.5}Co_{0.5}Mn_{0.5}O₂ | Negative electrode |
| Example 41 | Li₁.₃Al_{0.3}Ti₁.₇(PO₄) ₃ | Nb₂TiO₇ | LiNi_{0.5}Co_{0.2}Mn_{0.3}O₂ | Negative electrode |
| Example 42 | Li_{1.3}Al_{0.3}Ti_{1.7}(PO₄) ₃ | Nb₂TiO₇ | LiNi_{0.5}Co_{0.5}Mn_{0.5}O₂ | Negative electrode |
| Example 43 | Li_{1.3}Al_{0.3}Ti_{1.7}(PO₄) ₃ | Nb₂TiO₇ | LiNi₀.₅Co_{0.2}Mn_{0.3}O₂ | Negative electrode |
| Example 44 | Li₁.₃Al_{0.3}Ti₁.₇ (PO₄) ₃ | Nb₂TiO₇ | LiNi_{0.5}Co_{0.5}Mn_{0.3}O₂ | Negative electrode |
| Example 45 | Li_{1.3}Al_{0.3}Ti_{1.7} (PO₄) ₃ | Nb₂TiO₇ | LiNi_{0.5}Co_{0.2}Mn_{0.3}O₂ | Negative electrode |
| Example 46 | Li₁.₃Al_{0.3}Ti₁.₇ (PO₄)₃ | Nb₂TiO₇ | LiNi_{0.5}Co_{0.2}Mn_{0.3}O₂ | Negative electrode |
| Example 47 | Li_{1.3}Al_{0.3}Ti_{1.7} (PO₄)₃ | Nb₂TiO₇ | LiNi_{0.5}Co_{0.2}Mn_{0.3}O₂ | Negative electrode |
| Example 48 | Li₁.₃Al_{0.3}Ti₁.₇ (PO₄)₃ | Nb₂TiO₇ | LiNi_{0.5}Co_{0.2}Mn_{0.3}O₂ | Positive electrode |
| Example 49 | Li_{1.3}Al_{0.3}Ti_{1.7} (PO₄)₃ | Nb₂TiO₇ | LiNi_{0.5}Co_{0.2}Mn_{0.3}O₂ | Positive electrode and Negative electrode |
| Example 50 | Li_{1.3}Al_{0.3}Ti_{1.7} (PO₁)₃ | Nb₂TiO₇ | LiNi_{0.6}Co_{0.7.}Mn_{0.7}.O_{2.} | Negative electrode |
| Example 51 | Li_{1.3}Al_{0.3}Ti_{1.7}(PO₄)₃ | Nb₂TiO₇ | LiNi_{0.8}Co_{0.1}Mn_{0.1}O₂ | Negative electrode |
| Example 52 | Li_{1.3}Al_{0.3}Ti_{1.7} (PO₄)₃ | Nb₂TiO₇ | LiNi_{0.5}Co_{0.1}Mn_{0.1}O₂ | Negative electrode |
| Example 53 | Li₁.₃Al_{0.3}Ti₁.₇ (PO₄)₃ | Nb₂TiO₇ | LiNi_{0.8}Co_{0.8}Mn_{0.2}O₂ | Negative electrode |
| Example 54 | Li_{1.3}Al_{0.3}Ti_{1.7} (PO₄**)**₃ | Nb₂TiO₇ | LiNi_{0.8}Co_{0.1}Mn_{0.1}O₂ | Negative electrode |
| Example 55 | Li₁.₃Al_{0.3}Ti₁.₇ (PO₄)₃ | Nb₂TiO₇ | LiNi_{0.8}Co_{0.1}Mn_{0.1}O₂ | Negative electrode |
| Example 56 | Li₁.₃Al_{0.3}Ti₁.₇ (PO₄) | Nb₂TiO₇ | LiNi_{0.8}Co_{0.1}Mn_{0.1}O₂ | Negative electrode |
| Example 57 | Li_{1.3}Al_{0.3}Ti_{1.7} (PO₄)₃ | Nb₂TiO₇ | LiNi_{0.8}Co_{0.1}Mn_{0.1}O₂ | Negative electrode |
| Example 58 | Li_{1.3}Al_{0.3}Ti_{1.7} (PO₄)₃ | Nb₂TiO₇ | LiNi_{0.8}Co_{0.1}Mn_{0.1}O₂ | Negative electrode |

Table 10 shows the first particle size and the second particle size in the particle size distribution of the electrically insulating particles used in each of Examples 36 to 58. The ratio (first peak strength / second peak strength) between the peak strength of the first peak and the peak strength of the second peak is also shown.

**[Table 10]**

| | First particle size (µm) | Second particle size (µm) | Peak strength of first peak / peak strength of second peak |
|---|---|---|---|
| Example 36 | 0.11 | 0.30 | 2 |
| Example 37 | 0.11 | 1.0 | 2 |
| Example 38 | 0.11 | 5.0 | 2 |
| Example 39 | 0.30 | 1.0 | 2 |
| Example 40 | 0.30 | 5.0 | 2 |
| Example 41 | 0.50 | 1.0 | 2 |
| Example 42 | 0.50 | 5.0 | 2 |
| Example 43 | 0.9 | 0.30 | 2 |
| Example 44 | 0.9 | 0.50 | 2 |
| Example 45 | 0.9 | 5.0 | 2 |
| Example 46 | 1.0 | 5.0 | 2 |
| Example 47 | 1.0 | 0.50 | 2 |
| Example 48 | 0.50 | 1.0 | 2 |
| Example 49 | 0.50 | 1.0 | 2 |
| Example 50 | 0.50 | 1.0 | 2 |
| Example 51 | 0.50 | 1.0 | 2 |
| Example 52 | 0.50 | 1.0 | 0.9 |
| Example 53 | 0.50 | 1.0 | 1.1 |
| Example 54 | 0.50 | 1.0 | 1.3 |
| Example 55 | 0.50 | 1.0 | 4.5 |
| Example 56 | 0.50 | 1.0 | 6 |
| Example 57 | 0.50 | 1.0 | 9 |
| Example 58 | 0.50 | 1.0 | 12 |

### (Comparative Examples 19 to 20)

Secondary batteries were produced in accordance with the same procedure as in Example 1 except that electrically insulating particles of a particle size distribution having a single peak corresponding to the first particle size shown in Table 12 were used.

### (Comparative Examples 21 to 24)

Secondary batteries were produced in accordance with the same procedure as in Example 36 except that electrically insulating particles of a particle size distribution having a single peak corresponding to the first particle size shown in Table 12 were used.

### (Comparative Examples 25 to 28)

Secondary batteries were produced respectively in accordance with the same procedures as in Examples 48 to 51 except that electrically insulating particles of a particle size distribution having a single peak corresponding to the first particle size shown in Table 12 were used.

Table 11 shows the materials used for the electrically insulating particles, the negative electrode active material, and the positive electrode active material in each of Comparative Examples 19 to 28. Table 11 also shows the electrode onto which the material of the electrical insulation layer was applied when producing the electrical insulation layer.

**[Table 11]**

| | Electrically insulating particle | Negative electrode active material | Positive electrode active material | Electrode onto which the electrical insulation layer was applied |
|---|---|---|---|---|
| Comparative Example 19 | Li₇La₃Zr₂O₁₂ | Li₄Ti₅O₁₂ | LiCoO₂ | Negative electrode |
| Comparative Example 20 | Li₇La₃Zr₂O₁₂ | Li₄Ti₅O₁₂ | LiCoO₂ | Negative electrode |
| Comparative Example 21 | Li_{1.3}Al_{0.3}Ti_{1.7} (PO₄)₃ | Nb₂TiO₇ | LiNi_{0.5}Co_{0.5}Mn_{0.5}O₂ | Negative electrode |
| Comparative Example 22 | Li_{1.3}Al_{0.3}Ti_{1.7}(PO₄)₃ | Nb₂TiO₇ | LiNi_{0.5}Co_{0.2}Mn_{0.3}O₂ | Negative electrode |
| Comparative Example 23 | Li_{1.3}Al_{0.3}Ti_{1.7} (PO₄)₃ | Nb₂TiO₇ | LiNi_{0.5}Co_{0.2}Mn_{0.3}O₂ | Negative electrode |
| Comparative Example 24 | Li_{1.3}Al_{0.3}Ti_{1.7} (PO₄)₃ | Nb₂TiO₇ | LiNi_{0.3}Co_{0.2}Mn_{0.3}O₂ | Negative electrode |
| Comparative Example 25 | Li_{1.3}Al_{0.3}Ti_{1.7} (PO₄)₃ | Nb₂TiO₇ | LiNi_{0.5}Co_{0.2}Mn_{0.3}O₂ | Positive electrode |
| Comparative Example 26 | Li_{1.3}Al_{0.3}Ti_{1.7} (PO₄)₃ | Nb₂TiO₇ | LiNi_{0.5}Co_{0.2}Mn_{0.3}O₂ | Positive electrode and Negative electrode |
| Comparative Example 27 | Li_{1.3}Al_{0.3}Ti_{1.7} (PO₄)₃ | Nb₂TiO₇ | LiNi_{0.6}Co_{0.2}Mn_{0.2}O₂ | Negative electrode |
| Comparative Example 28 | Li_{1.3}Al_{0.3}Ti_{1.7} (PO₄)₃ | Nb₂TiO₇ | LiNi_{0.8}Co_{0.1}Mn_{0.1}O₂ | Negative electrode |

Table 12 shows the particle size associated with the particle size distribution of the electrically insulating particles used in each of Comparative Examples 19 to 28.

**[Table 12]**

| | First particle size (µm) | Second particle size (pm) | Peak strength of first peak / peak strength of second peak |
|---|---|---|---|
| Comparative Example 19 | 0.09 | - | - |
| Comparative Example 20 | 0.90 | - | - |
| Comparative Example 21 | 0.11 | - | - |
| Comparative Example 22 | 0.50 | - | - |
| Comparative Example 23 | 1.0 | - | - |
| Comparative Example 24 | 5.0 | - | - |
| Comparative Example 25 | 0.50 | - | - |
| Comparative Example 26 | 0.50 | - | - |
| Comparative Example 27 | 0.50 | - | - |
| Comparative Example 28 | 0.50 | - | - |

Each of the secondary batteries obtained in Examples 23 to 58 and the secondary batteries obtained in Comparative Examples 19 to 28 was charged up to 2.5 V and left to stand for 4 weeks under a 60°C environment, and thereafter, the remaining capacity was measured. The remaining capacity (%) was defined as remaining capacity (%) = "capacity after storage / capacity before storage × 100". In addition, the thickness and porosity of the electrical insulation layer in each secondary battery was examined by the above-described method.

Table 13 shows the results in Examples 23 to 35. Table 13 also shows the thickness and porosity of the electrical insulation layer examined in each secondary battery.

**[Table 13]**

| | Remaining capacity (%) | Thickness of electrical insulation layer (µm) | Porosity of electrical insulation layer (%) |
|---|---|---|---|
| Example 23 | 66 | 5 | 20 |
| Example 24 | 67 | 5 | 20 |
| Example 25 | 66 | 5 | 20 |
| Example 26 | 74 | 5 | 20 |
| Example 27 | 72 | 5 | 20 |
| Example 28 | 80 | 5 | 20 |
| Example 29 | 68 | 5 | 20 |
| Example 30 | 72 | 5 | 20 |
| Example 31 | 79 | 5 | 20 |
| Example 32 | 78 | 5 | 20 |
| Example 33 | 76 | 5 | 20 |
| Example 34 | 73 | 5 | 20 |
| Example 35 | 69 | 5 | 20 |

Table 14 shows the results in Examples 36 to 58. Table 14 also shows the thickness and porosity of the electrical insulation layer examined in each secondary battery.

**[Table 14]**

| | Remaining capacity (%) | Thickness of electrical insulation layer (µm) | Porosity of electrical insulation layer (%) |
|---|---|---|---|
| Example 36 | 72 | 5 | 20 |
| Example 37 | 75 | 5 | 20 |
| Example 38 | 73 | 5 | 20 |
| Example 39 | 79 | 5 | 20 |
| Example 40 | 79 | 5 | 20 |
| Example 41 | 80 | 5 | 20 |
| Example 42 | 78 | 5 | 20 |
| Example 43 | 72 | 5 | 20 |
| Example 44 | 70 | 5 | 20 |
| Example 45 | 80 | 5 | 20 |
| Example 46 | 77 | 5 | 20 |
| Example 47 | 72 | 5 | 20 |
| Example 48 | 80 | 5 | 20 |
| Example 49 | 82 | 5 | 20 |
| Example 50 | 78 | 5 | 20 |
| Example 51 | 77 | 5 | 20 |
| Example 52 | 68 | 5 | 20 |
| Example 53 | 72 | 5 | 20 |
| Example 54 | 78 | 5 | 20 |
| Example 55 | 77 | 5 | 20 |
| Example 56 | 75 | 5 | 20 |
| Example 57 | 73 | 5 | 20 |
| Example 58 | 68 | 5 | 20 |

Table 15 shows the results in Comparative Examples 19 to 28. Table 15 also shows the thickness and porosity of the electrical insulation layer examined in each secondary battery.

**[Table 15]**

| | Remaining capacity (%) | Thickness of electrical insulation layer (µm) | Porosity of electrical insulation layer (%) |
|---|---|---|---|
| Comparative Example 19 | 60 | 5 | 20 |
| Comparative Example 20 | 66 | 5 | 20 |
| Comparative Example 21 | 64 | 5 | 20 |
| Comparative Example 22 | 67 | 5 | 20 |
| Comparative Example 23 | 62 | 5 | 20 |
| Comparative Example 24 | 59 | 5 | 20 |
| Comparative Example 25 | 67 | 5 | 20 |
| Comparative Example 26 | 68 | 5 | 20 |
| Comparative Example 27 | 66 | 5 | 20 |
| Comparative Example 28 | 65 | 5 | 20 |

In Examples 23 to 35 and Comparative Examples 19 to 20, for all the secondary batteries, Li₇La₃Zr₂O₁₂ powder was used as the electrically insulating particles, spinel lithium titanium oxide Li₄Ti₅O₁₂ powder was used as the negative electrode active material, and lithium cobalt oxide was used as the positive electrode active material. From the results shown in Table 13 and Table 15, it can be seen that for the secondary batteries produced in Examples 23 to 35, the remaining capacity is higher compared to that for secondary batteries produced in Comparative Examples 19 to 20. Therefore, it is apparent that in Examples 23 to 25, the self-discharge amount of the secondary battery was less as compared to the secondary batteries of Comparative Examples 19 to 20.

In Examples 36 to 49 and Comparative Examples 21 to 26, for all the secondary batteries, Li₁.₃Al₀.₃Ti_{1.7}(PO₄)₃ powder was used as the electrically insulating particles, monoclinic niobium titanium composite oxide Nb₂TiO₇ powder was used as the negative electrode active material, and lithium nickel cobalt manganese composite oxide LiNi_{0.5}Co_{0.2}Mn_{0.3}O₂ powder was used as the positive electrode active material. From the results shown in Table 14 and Table 15, it can be seen that for the secondary batteries produced in Examples 36 to 49, the remaining capacity is higher compared to that for secondary batteries produced in Comparative Examples 21 to 26. Therefore, it is apparent that in Examples 36 to 49, the self-discharge amount of the secondary battery was less as compared to the secondary batteries of Comparative Examples 21 to 26.

In Example 50 and Comparative Example 27, for either of the secondary batteries, Li_{1.3}Al_{0.3}Ti_{1.7}(PO₄)₃ powder was used as the electrically insulating particles, monoclinic niobium titanium composite oxide Nb₂TiO₇ powder was used as the negative electrode active material, and lithium nickel cobalt manganese composite oxide LiNi_{0.6}Co_{0.2}Mn_{0.2}O₂ powder was used as the positive electrode active material. From the results shown in Table 14 and Table 15, it can be seen that for the secondary battery produced in Example 50, the remaining capacity is higher compared to that for the secondary battery produced in Comparative Example 27. Therefore, it is apparent that in Example 50, the self-discharge amount of the secondary battery was less as compared to the secondary battery of Comparative Example 27.

In Examples 51 to 58 and Comparative Example 28, for all the secondary batteries, Li₁.₃Al_{0.3}Ti_{1.7}(PO₄)₃ powder was used as the electrically insulating particles, monoclinic niobium titanium composite oxide Nb₂TiO₇ powder was used as the negative electrode active material, and lithium nickel cobalt manganese composite oxide LiNi_{0.8}Co_{0.1}Mn_{0.1}O₂ powder was used as the positive electrode active material. From the results shown in Table 14 and Table 15, it can be seen that for the batteries produced in Examples 51 to 58, the remaining capacity is higher compared to that for secondary batteries produced in Comparative Example 28. Therefore, it is apparent that in Examples 51 to 58, the self-discharge amount of the secondary battery was less as compared to the secondary battery of Comparative Example 28.

As described above, each secondary battery that used the electrical insulation layer containing electrically insulating particles including at least two peaks in the particle size distribution was able to suppress self-discharge while reducing the interval between the negative electrode layer and the positive electrode layer. This indicates that when electrically insulating particles including at least two peaks in the particle size distribution are used for the electrical insulation layer, it is possible to increase the energy density and suppress self-discharge.

The secondary battery according to at least one of the approaches and the examples described above includes a negative electrode active material-containing layer, a positive electrode active material-containing layer, and an electrical insulation layer. The electrical insulation layer is provided between the negative electrode active material-containing layer and the positive electrode active material-containing layer and contains electrically insulating particles. The particle size distribution of the electrically insulating particles includes at least two peaks. In a secondary battery having such an arrangement, self-discharge is suppressed.

The present disclosure also encompasses the following approaches of batteries:
1. A secondary battery comprising:
   a negative electrode active material-containing layer;
   a positive electrode active material-containing layer; and
   an electrical insulation layer provided between the negative electrode active material-containing layer and the positive electrode active material-containing layer, the electrical insulation layer containing electrically insulating particles, and a particle size distribution of the electrically insulating particles including at least two peaks.
2. The secondary battery according to clause 1,
   wherein the at least two peaks comprise a first peak having a highest peak strength and a second peak having a second highest peak strength following the first peak.
3. The secondary battery according to clause 2,
   wherein one of a first particle size corresponding to the first peak and a second particle size corresponding to the second peak is at least twice larger than another.
4. The secondary battery according to clause 3,
   wherein the first particle size is greater than 0.1 µm and equal to or less than 1 µm, and the second particle size is 0.3 µm to 5 µm.
5. The secondary battery according to clause 2,
   wherein a first particle size corresponding to the first peak is smaller than a second particle size corresponding to the second peak.
6. The secondary battery according to clause 3 or 4,
   wherein the first particle size is smaller than the second particle size.
7. The secondary battery according to any one of clauses 1 to 6, wherein at least one of the negative electrode active material-containing layer and the positive electrode active material-containing layer comprises the electrically insulating particles.
8. The secondary battery according to any one of clauses 1 to 7, wherein the electrically insulating particles comprise at least one of a metal oxide and a solid electrolyte.
9. The secondary battery according to clause 8,
   wherein the electrically insulating particles comprise the solid electrolyte.
10. The secondary battery according to any one of clauses 1 to 9, further comprising a nonaqueous electrolyte.
11. The secondary battery according to clause 10,
   wherein the nonaqueous electrolyte comprises a gel nonaqueous electrolyte.
12. The secondary battery according to any one of clauses 1 to 11, wherein the negative electrode active material-containing layer comprises at least one titanium-containing oxide selected from the group consisting of spinel-type lithium titanate, a niobium-titanium composite oxide represented by a general formula Ti₁₋ₓ,M_{x+y}Nb_{2-y}O_{7-σ} where M is at least one element selected from the group consisting of Mg, Fe, Ni, Co, W, Ta, and Mo, and 0 ≤ x < 1, 0 ≤ y < 1, and -0.3 ≤ σ ≤ 0.3, and a titanium-containing composite oxide represented by a general formula Li₂₊ₐMl_{2-b}Ti_{6-c}M2_{d}O_{14+δ} where M1 is at least one element selected from the group consisting of Sr, Ba, Ca, Mg, Na, Cs, Rb, and K, M2 is at least one element selected from the group consisting of Zr, Sn, V, Nb, Ta, Mo, W, Y, Fe, Co, Cr, Mn, Ni, and Al, and 0 ≤ a ≤ 6, 0 ≤ b < 2, 0 ≤ c < 6, 0 ≤ d < 6, and -0.5 ≤ δ ≤ 0.5.
13. The secondary battery according to any one of clauses 1 to 12, further comprising:
   a container member; and
   plural of electrode groups each comprising the negative electrode active material-containing layer, the positive electrode active material-containing layer, and the electrical insulation layer,
   wherein the plural electrode groups are electrically connected in series and housed in the container member.
14. A battery pack comprising the secondary battery according to any one of clauses 1 to 13.
15. The battery pack according to clause 14, further comprising:
   an external power distribution terminal; and
   a protective circuit.
16. The battery pack according to clause 14 or 15, comprising plural of the secondary battery, the secondary batteries being electrically connected in series, in parallel, or in a combination of in a series and in parallel.
17. A vehicle comprising the battery pack according to any one of clauses 14 to 16.
18. The vehicle according to clause 17, which comprises a mechanism configured to convert kinetic energy of the vehicle into regenerative energy.

While certain approaches have been described, these approaches have been presented by way of example only, and are not intended to limit the scope of the claims. Indeed, the apparatuses described herein may be embodied in a variety of other forms; furthermore, various omissions, substitutions and changes in the form of the apparatuses described herein may be made.

## Claims

1. A secondary battery (100) comprising:
a negative electrode active material-containing layer (3b) ;
a positive electrode active material-containing layer (5b) ; and
an electrical insulation layer (4) provided between the negative electrode active material-containing layer (3b) and the positive electrode active material-containing layer (5b), the electrical insulation layer (4) containing electrically insulating particles, and a particle size distribution of the electrically insulating particles including at least two peaks.

2. The secondary battery (100) according to claim 1, wherein the at least two peaks comprise a first peak having a highest peak strength and a second peak having a second highest peak strength following the first peak.

3. The secondary battery (100) according to claim 2, wherein one of a first particle size corresponding to the first peak and a second particle size corresponding to the second peak is at least twice larger than another.

4. The secondary battery (100) according to claim 3, wherein the first particle size is greater than 0.1 µm and equal to or less than 1 µm, and the second particle size is 0.3 µm to 5 µm.

5. The secondary battery (100) according to claim 2, wherein a first particle size corresponding to the first peak is smaller than a second particle size corresponding to the second peak.

6. The secondary battery (100) according to claim 3 or 4, wherein the first particle size is smaller than the second particle size.

7. The secondary battery (100) according to any one of claims 1 to 6, wherein at least one of the negative electrode active material-containing layer (3b) and the positive electrode active material-containing layer (5b) comprises the electrically insulating particles.

8. The secondary battery (100) according to any one of claims 1 to 7, wherein the electrically insulating particles comprise at least one of a metal oxide and a solid electrolyte.

9. The secondary battery (100) according to claim 8, wherein the electrically insulating particles comprise the solid electrolyte.

10. The secondary battery (100) according to any one of claims 1 to 9, further comprising a nonaqueous electrolyte.

11. The secondary battery (100) according to claim 10, wherein the nonaqueous electrolyte comprises a gel nonaqueous electrolyte.

12. The secondary battery (100) according to any one of claims 1 to 11, wherein the negative electrode active material-containing layer (3b) comprises at least one titanium-containing oxide selected from the group consisting of spinel-type lithium titanate, a niobium-titanium composite oxide represented by a general formula Ti₁₋ₓM_{x+y}Nb_{2-y}O_{7-σ} where M is at least one element selected from the group consisting of Mg, Fe, Ni, Co, W, Ta, and Mo, and 0 ≤ x < 1, 0 ≤ y < 1, and -0.3 ≤ σ ≤ 0.3, and a titanium-containing composite oxide represented by a general formula Li₂₊ₐMl_{2-b}Ti_{6-c}M2_{d}O_{14+δ} where M1 is at least one element selected from the group consisting of Sr, Ba, Ca, Mg, Na, Cs, Rb, and K, M2 is at least one element selected from the group consisting of Zr, Sn, V, Nb, Ta, Mo, W, Y, Fe, Co, Cr, Mn, Ni, and Al, and 0 ≤ a ≤ 6, 0 ≤ b < 2, 0 ≤ c < 6, 0 ≤ d < 6, and -0.5 ≤ δ ≤ 0.5.

13. The secondary battery (100) according to any one of claims 1 to 12, further comprising:
a -container member (2); and
plural of electrode groups (1) each comprising the negative electrode active material-containing layer (3b), the positive electrode active material-containing layer (5b), and the electrical insulation layer (4),
wherein the plural electrode groups (1) are electrically connected in series and housed in the container member (2).

14. A battery pack (300) comprising the secondary battery (100) according to any one of claims 1 to 13.

15. The battery pack (300) according to claim 14, further comprising:
an external power distribution terminal (347); and
a protective circuit (344).

16. The battery pack (300) according to claim 14 or 15, comprising plural of the secondary battery (100), the secondary batteries (100) being electrically connected in series, in parallel, or in a combination of in a series and in parallel.

17. A vehicle (400) comprising the battery pack (300) according to any one of claims 14 to 16.

18. The vehicle (400) according to claim 17, which comprises a mechanism configured to convert kinetic energy of the vehicle (400) into regenerative energy.
